# EUROPEAN PATENT SPECIFICATION

(11) **EP 3 363 629 B1**
(45) Date of publication and mention of the grant of the patent: **01.12.2021**
(21) Application number: 16855549.8
(22) Date of filing: 14.10.2016
(51) Int. Cl.: C23C 28/00, C23C 22/34, B29C 65/00, B32B 7/06, B32B 15/09, B32B 15/18, B32B 15/20, B32B 27/08, B32B 27/36, B29K 705/06, B29K 705/12, B29K 67/00

(54) **RESIN-COATED SN-PLATED STEEL SHEET, AND METHOD AND FACILITY FOR MANUFACTURING THE SAME**
HARZBESCHICHTETES SN-PLATTIERTES STAHLBLECH SOWIE VERFAHREN UND ANLAGE ZUR HERSTELLUNG DAVON
TÔLE D'ACIER PLAQUÉE DE SN ET REVÊTUE DE RÉSINE, ET PROCÉDÉ ET INSTALLATION DE PRODUCTION DE CELLE-CI

(30) Priority: 14.10.2015 JP 2015202792
(43) Date of publication of application: 22.08.2018
(73) Proprietor: Nippon Steel Corporation, Tokyo (JP)
(72) Inventor: KADOWAKI Nobuo, Tokyo 100-8071 (JP); IWAKIRI Kazushi, Tokyo 100-8071 (JP); HIRATA Akihiko, Tokyo 100-8071 (JP); HIRAI Akiko, Tokyo 100-8071 (JP); ENDO Tomoyuki, Tokyo 100-8071 (JP)
(74) Representative: Vossius & Partner Patentanwälte Rechtsanwälte mbB
(86) International application number: PCT/JP2016/080606
(87) International publication number: WO 2017/065296

(56) References cited:
- EP-A1- 0 562 611
- JP-A- H0 577 358
- JP-A- H04 344 231
- JP-A- 2003 003 281
- JP-A- 2003 253 466
- JP-A- 2004 068 063
- JP-A- 2008 068 504
- US-A- 5 094 924

## Description

### [Technical Field of the Invention]

The present invention relates to a resin-coated Sn-plated steel sheet, and a method and a facility for manufacturing the resin-coated Sn-plated steel sheet.

### [Related Art]

Cans, which are made from a steel sheet (hereinafter, referred to as resin-coated TFS) obtained by coating a tin-free steel sheet (hereinafter, referred to as TFS) obtained by treating a steel sheet with an electrolytic chromic acid with a resin, are widely used as a beverage can.

A resin-coated TFS may not have sufficient corrosion resistance for cans such as cans for food which are filled with a content having a strong corrosive property. Therefore, cans, which are made from a resin-coated Sn-plated steel sheet obtained by coating a Sn-plated steel sheet with a resin, are widely used as a can for food.

As an example of the resin-coated TFS, a resin-coated TFS obtained by laminating a film having a primer layer on a TFS is given. As a method for laminating a film on a TFS, a thermal fusion-bonding method which heats a TFS by a heating roll and brings a film into contact with both surfaces of the TFS using a pressing roll (hereinafter, referred to as lamination roll) is used.

Patent Document 1 discloses a steel sheet for a container material in which a steel sheet surface on at least a side to be an inner surface of a can has a Sn-plated layer or a Fe-Sn alloy layer, and a chromium-free adhesive base treatment layer formed of a zirconium compound containing no fluoride or nitrate-nitrogen is formed thereon.

Patent Document 2 discloses a can which is formed by drawing or drawing ironing forming of a laminate in which a copolymerized polyester film containing ethylene terephthalate as a main unit and having a melting point of 170°C to 252°C is provided directly or via an adhesive primer on at least a side of a metallic material to be an inner surface of a can.

Patent Document 3 describes a laminated steel sheet for welding cans, wherein a tin plating layer, a chemical conversion treatment layer, an adhesive layer and a resin film are formed on a steel sheet.

Patent Document 4 describes a polyester resin film laminated steel plate or steel strip having a tin, an intermediate layer of chromium hydroxide, and a copolyester resin film in the upper layer of the steel plate or steel strip.

Patent Document 5 describes a polyester resin-coated tin alloy plated steel sheet having a tin alloy layer, a chemical conversion film, a thermosetting resin layer, and a polyester resin coating on a steel sheet.

Patent Document 6 describes a polyester resin-coated steel plate, wherein one or more kinds of surface treatment including a tin plating, a thin tin plating, a chromium plating, a zinc plating, a nickel plating, an electrolytic chromic acid treatment, chromic acid treatment is carried out on a low carbon cold rolled steel sheet, and the steel plate includes an adhesive primer and a thermoplastic polyester resin.

### [Prior Art Document]

### [Patent Document]

[Patent Document 1] Japanese Patent No. 5091803
[Patent Document 2] Japanese Unexamined Patent Application, First Publication No. H3-98844
[Patent Document 3] EP 0 562 611 A1
[Patent Document 4] US 5 094 924 A
[Patent Document 5] JP 2003 253466 A
[Patent Document 6] JP H04 344231 A

### [Disclosure of the Invention]

### [Problems to be Solved by the Invention]

In the technology disclosed in Patent Document 1, since the Sn-plated layer or Fe-Sn alloy layer formed on the base steel sheet directly comes into contact with the heating roll, Sn of a surface of the Sn-plated layer or Fe-Sn alloy layer is scraped. The reason why Sn is scraped is that Sn in the Sn-plated steel sheet has a low melting point and is soft, as compared with Cr in a TFS.

In the technology disclosed in Patent Document 1, since Sn is scraped, a large amount of Sn powder is generated and transferred to the heating roll, and thus indentations are likely to be generated. Accordingly, in a case where a film is laminated on the Sn-plated steel sheet, it is necessary to clean the heating roll frequently, and an improvement in productivity is desired.

In addition, in the technology disclosed in Patent Document 1, the cost increases in a case where the Sn-plating amount increases.

In the technology disclosed in Patent Document 2, the copolymerized polyester film is adhered via the adhesive primer, and the adhesive primer is coated on the copolymerized polyester film. Therefore, in a case where the copolymerized polyester film is laminated on the metallic material, a surface of the metallic material directly comes into contact with the heating roll. That is, the protection effect of the adhesive primer on the surface of the metallic material is very small. Accordingly, in a case where the copolymerized polyester film is laminated on the metallic material having a Sn-plated layer by using the technology disclosed in Patent Document 2, it is difficult to suppress the Sn powder.

The invention is contrived in view of the circumstances, and an object thereof is to provide a resin-coated Sn-plated steel sheet having excellent corrosion resistance and having less indentations, and a method and a facility for manufacturing the resin-coated Sn-plated steel sheet.

### [Means for Solving the Problem]

The invention employs the following means in order to solve the problems and achieve the object.
(1) A resin-coated Sn-plated steel sheet according to an aspect of the invention is provided with a steel sheet, a Sn-plated layer which is formed on at least one surface of the steel sheet and contains 0.2 to 12.0 g/m² of Sn in terms of metal Sn amount, a chemical conversion layer which is formed on the Sn-plated layer and contains a total of 50 to 100 mass% of inorganic hydroxide and inorganic oxide, and of which an adhered amount is 2.0 to 20.0 mg/m², a resin-cured coating film layer which is formed on the chemical conversion layer, and of which a maximum logarithmic decrement obtained by a rigid-body pendulum type vibration damping properties testing method at 150°C to 200°C is 0.15 or less, and an adhered amount is 0.10 to 5.00 g/m², and a thermoplastic resin layer which is formed on the resin-cured coating film layer, has an oriented crystal layer, and has a thickness of 5 to 50 µm. The thermoplastic resin layer is a single-layer film formed only of a stretched polyester-based film having a melting point of 232°C or higher, or a multi-layer film in which a polyester-based resin layer is formed under the stretched polyester-based film.
(2) In the resin-coated Sn-plated steel sheet according to (1), the thermoplastic resin layer may be the single-layer film, and the stretched polyester-based film may be a polyethylene terephthalate resin.
(3) In the resin-coated Sn-plated steel sheet according to (1), the thermoplastic resin layer may be the multi-layer film, the stretched polyester-based film may be a polyethylene terephthalate resin, and the polyester-based resin layer may be a first copolymerized polyester resin which contains an ethylene terephthalate unit and an ethylene isophthalate unit, and in which an isophthalic acid component is less than 12 mol% in a case where a dicarboxylic acid component is 100 mol%, and the dicarboxylic acid component excluding the isophthalic acid component is a terephthalic acid component, or a second copolymerized polyester resin which contains an ethylene terephthalate unit and a butylene terephthalate unit, and in which the butylene terephthalate unit is 50 mol% or less in a case where a dicarboxylic acid component is 100 mol%.
(4) A method for manufacturing a resin-coated Sn-plated steel sheet according to another aspect of the invention has a plating step of forming a Sn-plated layer containing 0.2 to 12.0 g/m² of Sn in terms of metal Sn amount on at least one surface of a steel sheet, a chemical conversion step of forming, on the Sn-plated layer, a chemical conversion layer of which an adhered amount is 2.0 to 20.0 mg/m² and which contains a total of 50% to 100% of inorganic hydroxide and inorganic oxide, a resin-cured coating film layer forming step of applying a resin to a surface of the chemical conversion layer and curing the resin by baking to form a resin-cured coating film layer of which a maximum logarithmic decrement obtained by a rigid-body pendulum type vibration damping properties testing method at a temperature of 150°C to 200°C is 0.15 or less, and an adhered amount is 0.10 to 5.00 g/m², and a thermal fusion-bonding step of thermally fusion-bonding a single-layer film formed only of a stretched polyester-based film having a melting point of 232°C or higher, or a multi-layer film in which a polyester-based resin layer is formed under the stretched polyester-based film at a temperature that is higher than the melting point of the stretched polyester-based film by 10°C or higher to form a thermoplastic resin layer having an oriented crystal layer and having a thickness of 5 to 50 µm on the resin-cured coating film layer.
(5) In the method for manufacturing a resin-coated Sn-plated steel sheet according to (4), the thermoplastic resin layer may be the single-layer film, and the stretched polyester-based film may be a polyethylene terephthalate resin.
(6) In the method for manufacturing a resin-coated Sn-plated steel sheet according to (4), the thermoplastic resin layer may be the multi-layer film, the stretched polyester-based film may be a polyethylene terephthalate resin, and the polyester-based resin layer may be a first copolymerized polyester resin which contains an ethylene terephthalate unit and an ethylene isophthalate unit, and in which an isophthalic acid component is less than 12 mol% in a case where a dicarboxylic acid component is 100 mol%, and the dicarboxylic acid component excluding the isophthalic acid component is a terephthalic acid component, or a second copolymerized polyester resin which contains the ethylene terephthalate unit and a butylene terephthalate unit, and in which the butylene terephthalate unit is 50 mol% or less in a case where a dicarboxylic acid component is 100 mol%.
(7) In the method for manufacturing a resin-coated Sn-plated steel sheet according to any one of (4) to (6), in the resin-cured coating film layer forming step, the resin may be applied using any one of a reverse roll coater, a gravure roll coater, a spray coater, a knife edge coater, a curtain coater, and a dip coater, and the applied resin may be baked and cured by hot air drying or near-infrared heating.
(8) A manufacturing facility for manufacturing a resin-coated Sn-plated steel sheet according to a further aspect of the invention is a manufacturing facility for manufacturing the resin-coated Sn-plated steel sheet according to any one of (1) to (3) and is provided with, in order from the upstream side, a plating device which is configured to form a Sn-plated layer on at least one surface of a steel sheet, a chemical conversion device which is configured to form a chemical conversion layer on the Sn-plated layer, a resin application device which is configured to apply a resin on the chemical conversion layer, a resin baking and curing device which is provided at a rear stage of the resin application device, and is configured to bake and cure the applied resin to form a resin-cured coating film layer, and a thermal fusion-bonding device which is provided at a rear stage of the resin baking and curing device and is provided with a heating roll and a lamination roll and thereby thermally fusion-bond a film to a surface of the resin-cured coating film layer to thus form a thermoplastic resin layer.

### [Effects of the Invention]

According to the aspects, it is possible to provide a resin-coated Sn-plated steel sheet having excellent corrosion resistance and having less indentations, and a method and a facility for manufacturing the resin-coated Sn-plated steel sheet.

### [Brief Description of the Drawings]

[FIG. 1] FIG. 1 is a schematic view showing an example of a layer configuration of a resin-coated Sn-plated steel sheet according to an embodiment.
[FIG. 2] FIG. 2 is a schematic view showing an example of a layer configuration of the resin-coated Sn-plated steel sheet according to the embodiment.
[FIG. 3] FIG. 3 is a graph showing an example of the relationship between the adhered amount of a chemical conversion layer and the formability of a resin-cured coating film layer according to the embodiment.
[FIG. 4] FIG. 4 is a graph showing an example of the relationship between the adhered amount of the chemical conversion layer and the peeling strength of a thermoplastic resin layer according to the embodiment.
[FIG. 5] FIG. 5 is a graph showing an example of the relationship between the maximum logarithmic decrement of the resin-cured coating film layer at 150°C to 200°C and the degree of adhesion of the resin and Sn-plating to a heating roll according to the embodiment.
[FIG. 6] FIG. 6 is a graph showing an example of the relationship between the adhered amount of the resin-cured coating film layer and the amount of indentations generated according to the embodiment.
[FIG. 7A] FIG. 7A is a schematic view showing an example of a layer configuration of the thermoplastic resin layer in a case where the thermoplastic resin layer is a single-layer film according to the embodiment.
[FIG. 7B] FIG. 7B is a schematic view showing an example of a layer configuration of the thermoplastic resin layer in a case where the thermoplastic resin layer is a multi-layer film according to the embodiment.
[FIG. 8A] FIG. 8A is a schematic view showing a method for measuring a 180° peeling strength of the thermoplastic resin layer according to the embodiment.
[FIG. 8B] FIG. 8B is a schematic view showing the method for measuring a 180° peeling strength of the thermoplastic resin layer according to the embodiment.
[FIG. 8C] FIG. 8C is a schematic view showing the method for measuring a 180° peeling strength of the thermoplastic resin layer according to the embodiment.
[FIG. 8D] FIG. 8D is a schematic view showing the method for measuring a 180° peeling strength of the thermoplastic resin layer according to the embodiment.
[FIG. 8E] FIG. 8E is a schematic view showing the method for measuring a 180° peeling strength of the thermoplastic resin layer according to the embodiment.

### [Embodiments of the Invention]

The inventors have attempt to specify a step of generating a Sn powder in order to solve the problems caused in a case where a film is laminated on a Sn-plated steel sheet. As a result, the inventors have found that the Sn powder is mainly generated in a thermal fusion-bonding step of laminating a film, more specifically, in the heating roll.

The inventors have examined a method for laminating a film without direct contact between a surface of the Sn-plated steel sheet between the heating roll. Specifically, the inventors have examined forming a resin-cured coating film layer on a Sn-plated steel sheet subjected to a chemical conversion treatment during a stage before the Sn-plated steel sheet is heated by the heating roll.

As a result of the examination, it has been found that by forming a resin-cured coating film layer on the Sn-plated steel sheet subjected to a chemical conversion treatment during a stage before the Sn-plated steel sheet is heated by the heating roll, the generation of the Sn powder can be prevented, and thus productivity of the resin-coated Sn-plated steel sheet can be improved.

In addition, it has been found that by forming a chemical conversion layer and the resin-cured coating film layer on the Sn-plated steel sheet, proper corrosion resistance is obtained even in a case where the Sn-plated layer has a small Sn content.

Hereinafter, a resin-coated Sn-plated steel sheet according to an embodiment, and a method and a facility for manufacturing the resin-coated Sn-plated steel sheet will be described with reference to the figures.

### (Resin-Coated Sn-Plated Steel Sheet 1)

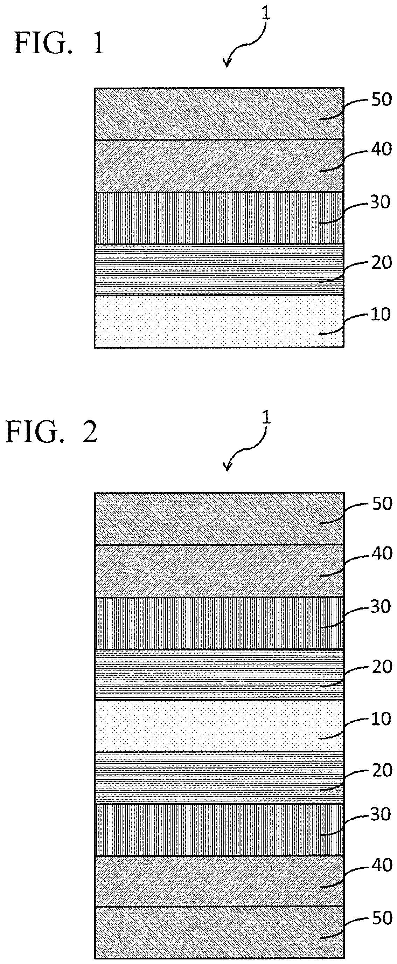

FIGS. 1 and 2 are schematic views showing an example of a layer configuration of a resin-coated Sn-plated steel sheet 1 according to this embodiment. As shown in FIGS. 1 and 2, the resin-coated Sn-plated steel sheet 1 has a steel sheet 10, a Sn-plated layer 20 which is formed on at least one surface of the steel sheet 10 and contains 0.2 to 12.0 g/m² of Sn in terms of metal Sn amount, a chemical conversion layer 30 which is formed on the Sn-plated layer 20 and contains a total of 50% to 100% of inorganic hydroxide and inorganic oxide, and of which the adhered amount is 2 to 20 mg/m², a resin-cured coating film layer 40 which is formed on the chemical conversion layer 30, and of which the maximum logarithmic decrement obtained by a rigid-body pendulum type vibration damping properties testing method at a temperature of 150°C to 200°C is 0.15 or less, and the adhered amount is 0.10 to 5.00 g/m², and a thermoplastic resin layer 50 which is formed on the resin-cured coating film layer 40, has an oriented crystal layer, and has a thickness of 5 to 50 µm.

The Sn-plated layer 20, the chemical conversion layer 30, the resin-cured coating film layer 40, and the thermoplastic resin layer 50 may be formed on one surface of the steel sheet 10 as shown in FIG. 1, or on both surfaces of the steel sheet 10 as shown in FIG. 2.

### <Steel Sheet 10>

The steel sheet 10 used in the resin-coated Sn-plated steel sheet 1 is not particularly limited. However, it is not preferable that the steel sheet 10 has a too small sheet thickness since workability is reduced. In addition, it is not preferable that the steel sheet 10 has a too large sheet thickness since this is not economical and the film is likely to break in a bending portion during the film lamination. For the above-described reasons, the steel sheet 10 preferably has a sheet thickness of 0.12 to 0.40 mm.

The average surface roughness Ra of the steel sheet 10 is preferably 0.05 to 0.40 µm. It is not preferable that the average surface roughness Ra of the steel sheet 10 is less than 0.05 µm since sliding ability deteriorates in a case where the resin-coated Sn-plated steel sheet 1 is formed. It is not preferable that the average surface roughness Ra of the steel sheet 10 is greater than 0.40 µm since a small flaw is likely to be caused and become a pinhole on a surface of the thermoplastic resin layer 50 after the forming of the resin-coated Sn-plated steel sheet 1.

### <Sn-plated layer 20>

The Sn-plated layer 20 containing 0.2 to 12.0 g/m² of Sn in terms of metal Sn amount is formed on at least one surface of the steel sheet 10. In a case where the resin-coated Sn-plated steel sheet 1 has the Sn-plated layer 20, the resin-coated Sn-plated steel sheet 1 may have proper corrosion resistance.

In order to impart proper corrosion resistance to the resin-coated Sn-plated steel sheet 1, the Sn content of the Sn-plated layer 20 is preferably 0.2 to 12.0 g/m² in terms of metal Sn amount. It is not preferable that the Sn content of the Sn-plated layer 20 is less than 0.2 g/m² since the resin-coated Sn-plated steel sheet 1 does not have sufficient corrosion resistance. It is not preferable that the Sn content of the Sn-plated layer 20 is greater than 12.0 g/m² since the Sn-plated layer 20 is melted during the film lamination, and thus the metal Sn and/or Sn-Fe alloy of the surface thereof is peeled off in a spot-like pattern and unevenness is likely to occur.

The Sn content of the Sn-plated layer 20 is preferably 85 mass% or greater, and more preferably 90 mass% or greater with respect to the total mass of the Sn-plated layer 20.

The corrosion resistance of the resin-coated Sn-plated steel sheet 1 is improved as the Sn content of the Sn-plated layer 20 is increased. However, this is not preferable from the economical viewpoint. Therefore, the Sn content of the Sn-plated layer 20 may not be increased any more if the required corrosion resistance of the resin-coated Sn-plated steel sheet 1 is secured.

The corrosion resistance of the resin-coated Sn-plated steel sheet 1 depends not only on the Sn content of the Sn-plated layer 20, but also on the compositions or adhered amounts of the resin-cured coating film layer 40 and the thermoplastic resin layer 50 to be described later. Therefore, the Sn content of the Sn-plated layer 20 may be appropriately determined within a range of 0.2 to 12.0 g/m² in accordance with the compositions or adhered amounts of the resin-cured coating film layer 40 and the thermoplastic resin layer 50.

### <Chemical Conversion Layer 30>

The chemical conversion layer 30, of which the adhered amount is 2.0 to 20.0 mg/m² and which contains a total of 50 to 100 mass% of inorganic hydroxide and inorganic oxide, is formed on the Sn-plated layer 20.

The chemical conversion layer 30 suppresses oxidation of Sn by forming a hydrated oxide film on the Sn-plated layer 20. In addition, the chemical conversion layer 30 improves adhesion of the resin-cured coating film layer 40 by hydrogen-bonding to the resin-cured coating film layer 40.

It is not preferable that the adhered amount of the chemical conversion layer 30 is less than 2.0 mg/m² since oxidation of the surface of the Sn-plated layer 20 cannot be properly suppressed, wettability of the chemical conversion layer 30 is reduced, and thus it is difficult to uniformly form the resin-cured coating film layer 40 on the chemical conversion layer 30. It is not preferable that the adhered amount of the chemical conversion layer 30 is greater than 20.0 mg/m² since the chemical conversion layer 30 is likely to be peeled off from the Sn-plated layer 20 which is a lower layer, and thus the thermoplastic resin layer 50 does not have a sufficient adhesive strength (peeling strength). The peeling resistance of the thermoplastic resin layer 50 to be required during the can making is 10 N/15 mm.

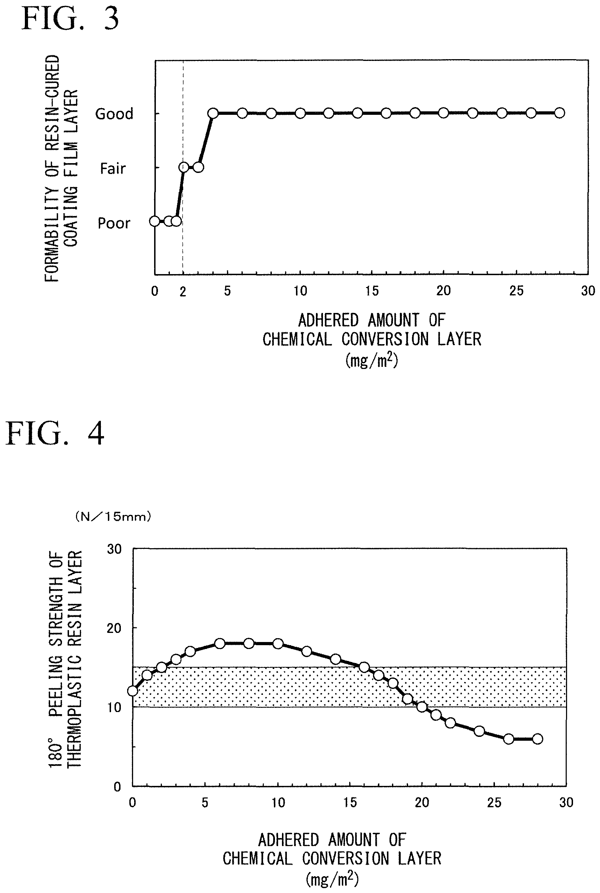

FIG. 3 is a graph showing an example of the relationship between the adhered amount of the chemical conversion layer 30 and the formability of the resin-cured coating film layer 40 according to this embodiment.

FIG. 3 is a graph showing the formability of the resin-cured coating film layer 40, in a case where a Sn-plated layer 20 containing 2.8 g/m² of Sn in terms of metal Sn amount is formed on a surface of a steel sheet 10, a chemical conversion layer 30 containing Zr hydroxide and Zr oxide is formed on a surface of the Sn-plated layer 20, a resin-cured coating film layer 40 containing an aqueous polyester-based resin as a main component is formed with an adhered amount of 0.5 g/m² on a surface of the chemical conversion layer 30.

In FIG. 3, the vertical axis represents the followings.
- Good: The resin-cured coating film layer 40 can be uniformly formed.
- Fair: The resin-cured coating film layer 40 can be formed, but the resin-cured coating film layer 40 to be formed does not have a uniform film thickness.
- Poor: The surface of the chemical conversion layer 30 does not have preferable wettability, and thus the resin-cured coating film layer 40 cannot be formed.

It is not preferable that the adhered amount of the chemical conversion layer 30 is less than 2.0 mg/m² since the formability of the resin-cured coating film layer 40 is Poor as shown in FIG. 2. Therefore, the adhered amount of the chemical conversion layer 30 is adjusted to 2.0 mg/m² or greater.

FIG. 4 is a graph showing an example of the relationship between the adhered amount of the chemical conversion layer 30 and the 180° peeling strength of the thermoplastic resin layer 50.

FIG. 4 is a graph showing the relationship between the adhered amount of the chemical conversion layer 30 and the 180° peeling strength of the thermoplastic resin layer 50, in a case where a Sn-plated layer 20 containing 2.8 g/m² of Sn in terms of metal Sn amount is formed on a surface of a steel sheet 10, a chemical conversion layer 30 containing Zr hydroxide and Zr oxide is formed on a surface of the Sn-plated layer 20, a resin-cured coating film layer 40 containing a polyester resin as a main component is formed with an adhered amount of 0.2 g/m² on a surface of the chemical conversion layer 30, and a thermoplastic resin layer 50 having a thickness of 20 µm and containing PET as a main component is formed on a surface of the resin-cured coating film layer 40.

The following method was used in the measurement of the 180° peeling strength of the thermoplastic resin layer 50. That is, the 180° peeling strength of the thermoplastic resin layer 50 was measured by a method to be described as follows.

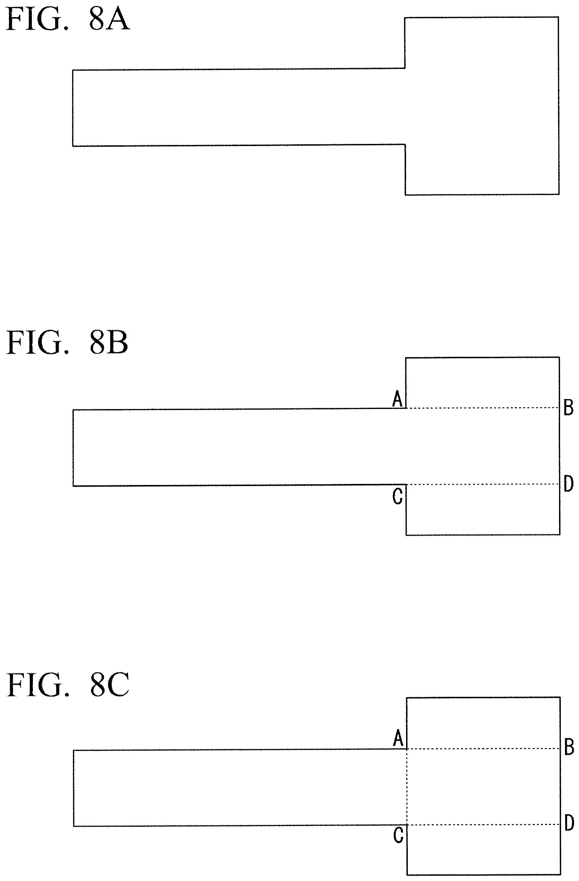

First, a test piece was prepared by punching the resin-coated Sn-plated steel sheet 1 into a shape shown in FIG. 8A using a special punching die tool. Next, as shown in FIG. 8B, flaws reaching the steel sheet surface from the film surface were formed along a line AB and a line CD, respectively.

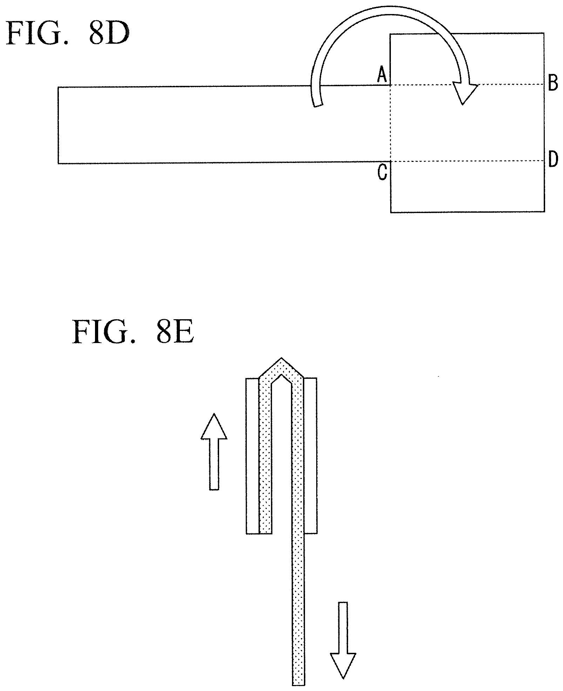

Next, as shown in FIG. 8C, the test piece was cut along a line AC (length: 15 mm) using a special die press. In a case where the cutting is performed, the cutting was performed such that only the steel sheet was cut and the film was not cut. Next, as shown in FIG. 8D, the test piece was folded left to right with the line AC as an axis to fold the film by 180°.

Using the test piece prepared as described above, a part on the right side of the line AC was inserted into a jig attached to one tension tester, and a part on the left side of the line AC was attached to a grip section of another tension tester as shown in FIG. 8E. In this state, the 180° peeling strength of the film was measured at a tensile speed of 20 mm/min at room temperature.

As shown in FIG. 4, the 180° peeling strength of the thermoplastic resin layer 50 is 10 N/15 mm or greater in a case where the adhered amount of the chemical conversion layer 30 is 0 to 20.0 mg/m². The peeling strength of the thermoplastic resin layer 50 is lower than 10 N/15 mm in a case where the adhered amount of the chemical conversion layer 30 is greater than 20.0 mg/m².

Here, in a resin-coated TFS according to the prior art, the 180° peeling strength of the thermoplastic resin layer is approximately 10 to 15 N/15 mm. That is, the adhered amount of the chemical conversion layer 30 is preferably 20.0 mg/m² or less in order to allow the thermoplastic resin layer 50 to have the same level of 180° peeling resistance as the resin-coated TFS according to the prior art.

For the above-described reasons, the adhered amount of the chemical conversion layer 30 is adjusted to 2.0 to 20.0 mg/m². The adhered amount of the chemical conversion layer 30 is preferably 2.0 to 10.0 mg/m².

The chemical conversion layer 30 contains inorganic hydroxide and inorganic oxide. The inorganic material is not particularly limited. However, one or more inorganic materials selected from the group consisting of Cr, Zr, Al, Si, P, Ti, Ce, and W are preferable from the viewpoint of the adhesion to the Sn-plated layer 20 and the adhesion to the resin-cured coating film layer 40.

The total amount of the inorganic hydroxide and the inorganic oxide in the chemical conversion layer 30 is 50 to 100 mass%. It is not preferable that the total amount of the inorganic hydroxide and the inorganic oxide in the chemical conversion layer 30 is less than 50 mass% since the layer thickness of the chemical conversion layer 30 becomes too large, and thus the adhesion between the chemical conversion layer 30 and the Sn-plated layer 20 is reduced. The total amount of the inorganic hydroxide and the inorganic oxide in the chemical conversion layer 30 is preferably 80 to 100%, and more preferably 95% to 100%.

Examples of the material contained in the chemical conversion layer 30, other than the inorganic hydroxide and the inorganic oxide, include O and impurities.

As described above, the chemical conversion layer 30 contains the inorganic hydroxide. The hydroxyl group in the inorganic hydroxide forms a hydrogen bond with the hydroxyl group in the resin-cured coating film layer 40. Accordingly, the adhesion between the chemical conversion layer 30 and the resin-cured coating film layer 40 is improved, and thus it is particularly preferable.

### <Resin-cured coating film layer 40>

The resin-cured coating film layer 40 is formed on the chemical conversion layer 30. The resin-cured coating film layer 40 suppresses the generation of a Sn powder by protecting the Sn-plated layer 20, and suppresses air bubbles entering into the interface between the resin-cured coating film layer 40 and the thermoplastic resin layer 50 when the thermoplastic resin layer 50 is thermally fusion-bonded.

In this embodiment, the logarithmic decrement of the resin-cured coating film layer 40 in a rigid-body pendulum type vibration damping properties testing method is specified. The logarithmic decrement in the rigid-body pendulum type vibration damping properties testing method can be measured using, for example, a rigid-body pendulum type physical property tester (RPT-3000) manufactured by A&D Company, Limited. This rigid-body pendulum type physical property tester is a tester which applies a blade of a rigid-body pendulum to a coating film and vibrates the blade at predetermined intervals to measure a fluctuation in physical properties of the coating film when the temperature is increased.

As specific measurement procedures, first, a steel sheet 10 having a thickness of 0.2 mm and including a Sn-plated layer 20, a chemical conversion layer 30, and a resin-cured coating film layer 40 having a coating film thickness of 300 to 800 nm is cut to have a length of 4 cm and a width of 2 cm so as to be used as a test piece. The test piece is set on a heating plate of the tester such that the resin-cured coating film layer 40 of the test piece faces upward, the blade part of the rigid-body pendulum is put on the resin-cured coating film layer 40, and the temperature is increased in steps of 1°C from 50°C. The measurement is started after 1 minute from the temperature increase of the heating plate, and is performed until the temperature reaches 250°C.

In many cases, the logarithmic decrement of a coating film is measured by a viscoelasticity measuring apparatus. However, in a case where the logarithmic decrement is measured using the viscoelasticity measuring apparatus, it is necessary to isolate only the resin-cured coating film layer 40 in order to measure the logarithmic decrement with one layer. Since the resin-cured coating film layer 40 has a small layer thickness, it is difficult to measure the logarithmic decrement of the resin-cured coating film layer 40 by the viscoelasticity measuring apparatus.

In a case where the logarithmic decrement of the resin-cured coating film layer 40 is obtained using a rigid-body pendulum type vibration damping properties testing method, there is no need to isolate the resin-cured coating film layer 40, and even in a case where the resin-cured coating film layer 40 has a small layer thickness, the logarithmic decrement can be accurately measured.

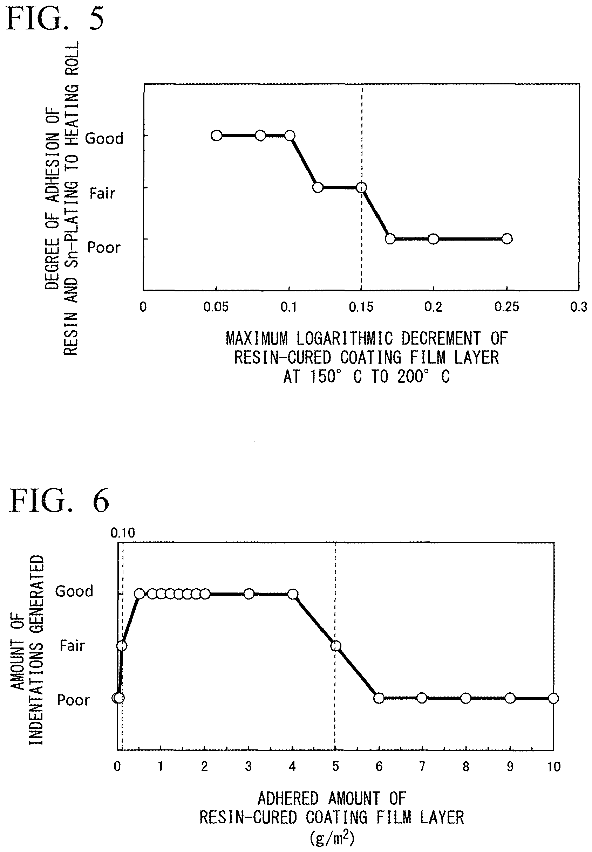

FIG. 5 is a graph showing an example of the relationship between the maximum logarithmic decrement of the resin-cured coating film layer 40 at 150°C to 200°C and the degree of adhesion of the resin-cured coating film layer and the Sn-plating to the heating roll.

FIG. 5 shows an example of the relationship between the maximum logarithmic decrement of the resin-cured coating film layer 40 at 150°C to 200°C and the degree of adhesion of the resin-cured coating film layer and the Sn-plating to the heating roll, in a case where a Sn-plated layer 20 containing 2.8 g/m² of Sn in terms of metal Sn amount is formed on a steel sheet 10, a chemical conversion layer 30 of which the adhered amount is 5.0 mg/m² and which contains Zr hydroxide and Zr oxide is formed on the Sn-plated layer 20, and a resin-cured coating film layer 40 is formed on the chemical conversion layer 30.

In FIG. 5, the logarithmic decrement of the resin-cured coating film layer 40 at 150°C to 200°C is changed by changing the conditions (heating temperature or heating time) for forming the resin-cured coating film layer 40. In addition, in obtaining the maximum logarithmic decrement of the resin-cured coating film layer 40 at 150°C to 200°C, the logarithmic decrement of the resin-cured coating film layer 40 is measured every 1°C in a range of 150°C to 200°C to measure at least 50 points, and the maximum value among them is selected.

In FIG. 5, the vertical axis is divided as follows based on the degree of adhesion of the resin-cured coating film layer and the Sn-plating to the heating roll.
- Good: The resin-cured coating film layer does not adhere to the heating roll surface.
- Fair: The resin-cured coating film layer adheres to a part of the heating roll surface, but does not adhere to almost all parts of the surface.
- Poor: The resin-cured coating film layer adheres to almost all parts of the heating roll surface, and the Sn-plating also adheres to a part of the surface.

As shown in FIG. 5, it is preferable that the maximum logarithmic decrement of the resin-cured coating film layer 40 at 150°C to 200°C is 0.15 or less since the degree of adhesion of the resin and the Sn-plating to the heating roll is equal to or higher than Fair. It is not preferable that the logarithmic decrement of the resin-cured coating film layer 40 at 150°C to 200°C is greater than 0.15 since the resin-cured coating film layer 40 or the Sn-plating is likely to adhere to the heating roll.

FIG. 6 is a graph showing an example of the relationship between the adhered amount of the resin-cured coating film layer 40 and the amount of indentations generated on the surface of the resin-cured coating film layer 40 in a case where the resin-cured coating film layer 40 is formed, and then passes through the heating roll (not shown).

FIG. 6 is a graph showing an example of the relationship between the adhered amount of the resin-cured coating film layer 40 and the amount of indentations generated, in a case where a Sn-plated layer 20 containing 2.8 g/m² of Sn in terms of metal Sn is formed on a steel sheet 10, a chemical conversion layer 30 of which the adhered amount is 4.0 mg/m² and which contains Zr hydroxide and Zr oxide is formed on the Sn-plated layer 20, and a resin-cured coating film layer 40 containing an aqueous polyester resin as a main component is formed on the chemical conversion layer 30.

In the graph of FIG. 6, the vertical axis is divided into three as follows based on the amount of indentations generated on the surface of the resin-cured coating film layer 40 after passing through the heating roll (not shown).
- Good: No indentations are generated on the surface of the resin-cured coating film layer 40.
- Fair: Indentations are generated on a part of the surface of the resin-cured coating film layer 40, but the surface of the resin-cured coating film layer 40 is not scraped.
- Poor: The surface of the resin-cured coating film layer 40 is scraped.

As shown in FIG. 6, it is not preferable the adhered amount of the resin-cured coating film layer 40 is less than 0.1 g/m² or greater than 5.0 g/m² since indentations are generated on the surface of the resin-cured coating film layer 40 after passing through the heating roll (not shown).

For the above-described reasons, the adhered amount of the resin-cured coating film layer 40 is adjusted to 0.1 to 5.0 g/m². The adhered amount of the resin-cured coating film layer 40 is preferably 0.2 to 2.0 g/m², and more preferably 0.4 to 1.0 g/m².

Examples of the resin used in the resin-cured coating film layer 40 include epoxy-based coatings, epoxy phenol-based coatings, acrylic modified epoxy coatings, polyester-based resins, urethane-based resins, and urethane urea-based resins. Examples of the component of a curing agent of a polyester-based resin, a urethane-based resin, or a urethane urea-based resin include amine resins, polyisocyanates, and acid anhydrides.

### <Thermoplastic Resin Layer 50>

The thermoplastic resin layer 50 having an oriented crystal layer (not shown) and having a thickness of 5 to 50 µm is formed on the resin-cured coating film layer 40.

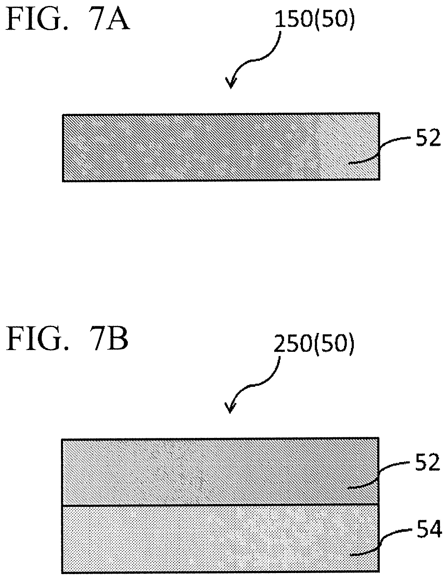

The thermoplastic resin layer 50 may be a single-layer film 150 formed only of a stretched polyester-based film 52 having a melting point of 232°C or higher as shown in FIG. 7A, or a multi-layer film 250 in which a polyester-based resin layer 54 is formed under the stretched polyester-based film 52 as shown in FIG. 7B.

As described above, the thermoplastic resin layer 50 has the stretched polyester-based film 52 having a melting point of 232°C or higher. The stretched polyester-based film 52 is preferable from the viewpoint of food sanitation since less odor components are adsorbed and monomer components are unlikely to be eluted. In addition, an oriented crystal layer (not shown) is developed in the stretched polyester-based film 52 in comparison with an unstretched film, and thus the stretched polyester-based film has a high film density and low water permeability. Therefore, the stretched polyester-based film has excellent corrosion resistance and an excellent breaking strength, and is thus preferable.

It is preferable that the thermoplastic resin layer 50 is a single-layer film 150 formed only of a stretched polyester-based film 52 having a melting point of 232°C or higher, or a multi-layer film 250 in which a polyester-based resin layer 54 is formed under the stretched polyester-based film 52 since the oriented crystal layer (not shown) is likely to be formed as an outermost layer of the resin-coated Sn-plated steel sheet 1 in a case where the thermoplastic resin layer 50 is thermally fusion-bonded.

Although details will be described later, the thermal fusion-bonding of the thermoplastic resin layer 50 is performed at a temperature of 232°C (melting point of Sn) or higher.

It is not preferable that the melting point of the stretched polyester-based film 52 is lower than 232°C that is a melting point of Sn since in a case where the thermoplastic resin layer 50 is thermally fusion-bonded at a temperature of 232°C or higher, the thermoplastic resin layer 50 is melted up to near the outermost layer, the oriented layer (not shown) of the Sn-plated layer 20 hardly remains, and thus the corrosion resistance is reduced.

In a case where the thermoplastic resin layer 50 is thermally fusion-bonded at a temperature of 232°C or higher, the Sn-plated layer 20 is melted. In this state, in a case where the thermoplastic resin layer 50 melted up to near the outermost layer is thermally fusion-bonded, wrinkles are likely to occur on the thermoplastic resin layer 50. From this viewpoint, the melting point of the stretched polyester-based film 52 is preferably 232°C or higher.

The melting point of the polyester-based resin layer 54 is also preferably 232°C or higher, but this is not an essential condition.

Preferable examples of the single-layer film 150 include a single-layer film 150 in which a stretched polyester-based film 52 is a polyethylene terephthalate (PET)-based film.

Preferable examples of the stretched polyester-based film 52 which is an upper layer of the multi-layer film 250 include PET-based films.

Preferable examples of the polyester-based resin layer 54 which is a lower layer of the multi-layer film 250 include a copolymerized polyester resin (hereinafter, referred to as first copolymerized polyester resin) which contains an ethylene terephthalate unit and an ethylene isophthalate unit, and in which an isophthalic acid component is less than 12 mol% in a case where a dicarboxylic acid component is 100 mol%, and the dicarboxylic acid component excluding the isophthalic acid component is a terephthalic acid component.

Preferable examples of the polyester-based resin layer 54 which is a lower layer of the multi-layer film 250 further include a copolymerized polyester resin (hereinafter, referred to as second copolymerized polyester resin) which contains an ethylene terephthalate unit and a butylene terephthalate unit, and in which the butylene terephthalate unit is 50 mol% or less in a case where a dicarboxylic acid component is 100 mol%.

In the above-described first copolymerized polyester resin, an isophthalic acid component is preferably 12 mol% or less in a case where a dicarboxylic acid component is 100 mol%. It is not preferable that the isophthalic acid component is greater than 12 mol% since the crystallinity of the oriented crystal layer (not shown) formed on the outermost surface of the thermoplastic resin layer 50 is reduced, the moisture permeability and the water permeability of the thermoplastic resin layer 50 increase, and thus the corrosion resistance of the resin-coated Sn-plated steel sheet 1 is reduced.

In the above-described second copolymerized polyester resin, a butylene terephthalate unit is preferably 50 mol% or less in a case where a dicarboxylic acid component is 100 mol%. In a case where the ratio of the butylene terephthalate unit is greater than 50 mol%, the melting point of the thermoplastic resin layer 50 is reduced. In this case, in a case where the resin-coated Sn-plated steel sheet 1 is subjected to a printing baking treatment, spherocrystal is developed during the melting and solidification of the thermoplastic resin layer 50, and the thermoplastic resin layer 50 embrittles. Therefore, small cracks are likely to be generated on the thermoplastic resin layer 50 during the forming of the resin-coated Sn-plated steel sheet 1. Therefore, the corrosion resistance is reduced, and thus it is not preferable.

In a case of the single-layer film 150 formed only of the first copolymerized polyester resin or the second copolymerized polyester resin, the single-layer film 150 is likely to be melted up to the surface layer in a case where the single-layer film 150 is thermally fusion-bonded at a temperature that is higher than the melting point of the single-layer film 150 by 10°C or higher. In this case, in a case where the resin-coated Sn-plated steel sheet 1 is subjected to a printing baking treatment, spherocrystal is developed during the melting and solidification of the thermoplastic resin layer 50, and the thermoplastic resin layer 50 embrittles. Therefore, small cracks are likely to be generated on the thermoplastic resin layer 50 during the forming of the resin-coated Sn-plated steel sheet 1, and thus the corrosion resistance is reduced.

For the above-described reasons, the single-layer film 150 formed only of the first copolymerized polyester resin or the second copolymerized polyester resin is not preferable as the thermoplastic resin layer 50.

The molecular weight of the stretched polyester-based film 52 is preferably 0.5 or greater in terms of intrinsic viscosity (IV) (measured using a mixed solvent of phenol and tetrachloroethane) from the viewpoint of the strength and the elongation rate of the thermoplastic resin layer 50.

The glass transition temperature of the stretched polyester-based film 52 is preferably 50°C or higher, and more preferably 60°C to 90°C from the viewpoint of preventing the elution of an oligomer component to the content.

The thickness of the thermoplastic resin layer 50 is preferably 5 to 50 µm.

It is not preferable that the thickness of the thermoplastic resin layer 50 is less than 5 µm since the corrosion resistance may be insufficient in accordance with the content, and the thermoplastic resin layer 50 may break during the working.

In a case where the thickness of the thermoplastic resin layer 50 is greater than 50 µm, the thermoplastic resin layer 50 has a relatively large thickness in the resin-coated Sn-plated steel sheet 1. In this case, the constriction force after a retort treatment of the resin-coated Sn-plated steel sheet 1 increases, and thus the thermoplastic resin layer 50 may be peeled off. Accordingly, it is not preferable.

In a case where the elongation rate of the thermoplastic resin layer 50 in a longitudinal direction (winding direction) of the resin film is less than 100%, the surface of the thermoplastic resin layer 50 may break in a portion with a small bend radius during the working into the resin-coated Sn-plated steel sheet 1. Therefore, the elongation rate of the thermoplastic resin layer 50 is preferably 100% or greater.

The elongation rate of the thermoplastic resin layer 50 represents La/Lb that is a value obtained by dividing a length La of the thermoplastic resin layer 50 in the longitudinal direction immediately before the thermoplastic resin layer 50 is pulled in the longitudinal direction and breaks by a length Lb of the thermoplastic resin layer 50 in a longitudinal direction in a natural state before the thermoplastic resin layer is pulled.

In order to prevent blocking, inorganic particles such as silica may be mixed and dispersed in the thermoplastic resin layer 50.

In a case where the thermoplastic resin layer 50 is directly applied, the components contained in the thermoplastic resin layer 50 become the raw materials of the thermoplastic resin layer 50.

In a case where the resin-coated Sn-plated steel sheet 1 is used as a beverage can or a can for food, the thermoplastic resin layer 50 is formed on at least a side to be an inner surface of the can due to the following reasons.

The inner surface side of a can directly comes into contact with a beverage or food. Accordingly, in a case where the thermoplastic resin layer 50 to be on the inner surface side of a can has a low melting point, the thermoplastic resin layer 50 is made amorphous up to the surface layer in a case where the thermoplastic resin layer 50 is thermally fusion-bonded. In this case, the beverage or the liquid in the food is likely to penetrate into the thermoplastic resin layer 50, and thus the steel sheet 10 is likely to corrode in a case where the liquid reaches the steel sheet 10. Accordingly, it is not preferable.

In the resin-coated Sn-plated steel sheet 1 according to this embodiment, the thermoplastic resin layer 50 is formed on the inner surface side of a can. The melting point of the thermoplastic resin layer 50 is 232°C or higher. Accordingly, even in a case where the thermal fusion-bonding is performed, the surface layer of the thennoplastic resin layer 50 is not made amorphous, and the oriented crystal layer (not shown) is formed. By virtue of the oriented crystal layer (not shown) present on the surface layer of the thennoplastic resin layer 50, it is possible to prevent the beverage or the liquid in the food from penetrating into the resin-coated Sn-plated steel sheet 1. Therefore, the resin-coated Sn-plated steel sheet 1 has proper corrosion resistance.

The outer surface side of a can is not required to have the same corrosion resistance as the inner surface side of the can. Accordingly, there is no essential need for the thermoplastic resin layer 50 to be formed on the outer surface side of the can. The outer surface side of the can may be subjected to a coating treatment after the manufacturing of the resin-coated Sn-plated steel sheet 1.

The Sn content in the Sn-plated layer 20 can be measured by, for example, a quantitative analysis method such as fluorescence X-ray analysis, or a method including: performing constant-current electrolysis of a test piece through an electrolytic peeling method applying a principle of constant current coulometry to record potential variations of the test piece accompanied by the electrolytic peeling by a pen recorder; calculating an electric quantity by an electrolysis time-potential curve; and estimating the adhered amount of Sn and a Sn-Fe alloy from the electric quantity. In the fluorescence X-ray analysis, a calibration curve related to the metal Sn amount is identified in advance using a Sn-plated steel sheet sample of which the metal Sn amount is already known, and the metal Sn amount can be relatively identified using the calibration curve.

The adhered amount of the chemical conversion layer 30 can be calculated by measuring the amount of the inorganic components contained in the chemical conversion layer 30 by fluorescent X-rays, and by performing the back calculation from the mixing ratio of the inorganic components among the components of the chemical conversion layer 30.

The total amount of the inorganic hydroxide and the inorganic oxide in the chemical conversion layer 30 can be expressed as the amount of the inorganic material by measuring the amount of the inorganic components contained in the chemical conversion layer 30 by fluorescent X-rays.

The adhered amount of the resin-cured coating film layer 40 can be measured by a weight method. That is, the mass of a steel sheet having a size of 20 cm × 20 cm before application of the resin-cured coating film layer 40 is measured to four decimal places in advance by a precision balance. After the resin-cured coating film layer 40 is applied, dried, and baked, the mass of the steel sheet is measured by the precision balance. A difference in mass of the steel sheet between before and after the formation of the resin-cured coating film layer 40 is obtained, and from the area of the resin-cured coating film layer 40 formed on the steel sheet, the adhered amount per unit area is calculated.

In the measurement of the thickness of the thermoplastic resin layer 50, first, the sheet thickness in a state before the formation of the thermoplastic resin layer 50 (a state in which the Sn-plated layer 20, the chemical conversion layer 30, and the resin-cured coating film layer 40 are formed on the steel sheet 10) is measured by a micrometer. Next, the thickness after the formation of the thermoplastic resin layer 50 is measured by the micrometer. A difference between both of the thicknesses is defined as the thickness of the thermoplastic resin layer 50.

### (Method for Manufacturing Resin-Coated Sn-Plated Steel Sheet 1)

The method for manufacturing a resin-coated Sn-plated steel sheet 1 has a plating step of forming a Sn-plated layer 20 containing 0.2 to 12.0 g/m² of Sn in terms of metal Sn amount on at least one surface of a steel sheet 10, a chemical conversion step of forming, on the Sn-plated layer 20, a chemical conversion layer 30 of which the adhered amount is 2.0 to 20.0 mg/m² and which contains a total of 50 to 100 mass% of inorganic hydroxide and inorganic oxide, a resin-cured coating film layer forming step of applying a resin to a surface of the chemical conversion layer 30 and curing the resin by baking to form a resin-cured coating film layer 40 of which the maximum logarithmic decrement obtained by a rigid-body pendulum type vibration damping properties testing method at a temperature of 150°C to 200°C is 0.15 or less, and the adhered amount is 0.10 to 5.00 g/m², and a thermal fusion-bonding step of thermally fusion-bonding a single-layer film 150 formed only of a stretched polyester-based film 52 having a melting point of 232°C or higher, or a multi-layer film 250 in which a polyester-based resin layer 54 is formed under the stretched polyester-based film 52 at a temperature that is higher than the melting point of the stretched polyester-based film 52 by 10°C or higher to form a thermoplastic resin layer 50 having an oriented crystal layer (not shown) and having a thickness of 5 to 50 µm on the resin-cured coating film layer 40.

### <Plating Step>

In the plating step, a Sn-plated layer 20 containing 0.2 to 12.0 g/m² of Sn in terms of metal Sn amount is formed on a steel sheet 10. The method for forming the Sn-plated layer 20 is not particularly limited. A known electro-plating method, a method for immersing the steel sheet 10 in melted Sn, or the like can be used.

After the plating step, a tin reflow process (a reflow treatment) may be performed on the steel sheet 10 having the Sn-plated layer 20 formed thereon.

To perform the tin reflow process, the steel sheet 10 having the Sn-plated layer 20 formed thereon is heated to a temperature that is equal to or higher than the melting point of Sn to melt the Sn-plated layer 20, and then rapid cooling is performed thereon. Due to the tin reflow process, Sn in the Sn-plated layer 20 positioned on the side of the steel sheet 10 is alloyed with Fe in the steel sheet 10, and thus a Fe-Sn alloy layer (not shown) is formed, and Sn of the remainder forms a Sn-plated layer (not shown).

### <Chemical Conversion Step>

In the chemical conversion step, a chemical conversion layer 30 of which the adhered amount is 2.0 to 20.0 mg/m² and which contains a total of 50 to 100 mass% of inorganic hydroxide and inorganic oxide is formed on the Sn-plated layer 20.

In the formation of the chemical conversion layer 30, an aqueous solution (hereinafter, referred to as chemical conversion liquid) containing a fluoride, nitrate, sulfate, chloride, acetate, formate, carbonate, or the like of one or more elements selected from the group consisting of Cr, Zr, Al, P, Ti, Ce, and W is used.

The method for forming the chemical conversion layer 30 is not particularly limited. Examples thereof include a method for subjecting the steel sheet 10 having the Sn-plated layer 20 formed thereon to an electrolytic treatment in a chemical conversion liquid, and a method for immersing the steel sheet 10 having the Sn-plated layer 20 formed thereon in a chemical conversion liquid.

The chemical conversion liquid may contain, other than the above-described compounds, a Si compound which is used as a silane coupling agent. The Si compound is preferable since it has excellent adhesion to the steel sheet 10 and the thermoplastic resin layer 50.

After the chemical conversion step, water washing or hot-water washing is preferably performed on the steel sheet 10 having the Sn-plated layer 20 and the chemical conversion layer 30 formed thereon. Water washing or hot-water washing is preferable since most of counter ion species of the elements is removed from the chemical conversion layer 30 by the water washing or hot-water washing.

A small amount of counter ion species of the elements may remain even in a case where water washing or hot-water washing is performed. However, a small amount of counter ion species of the elements may remain as long as the characteristics of the chemical conversion layer 30 are not affected.

### <Resin-Cured Coating Film Layer Forming Step>

In the resin-cured coating film layer forming step, a resin-cured coating film layer 40 of which the maximum logarithmic decrement obtained by a rigid-body pendulum type vibration damping properties testing method at 150°C to 200°C is 0.15 or less, and the adhered amount is 0.10 to 5.00 g/m² is formed by applying a resin to a surface of the chemical conversion layer 30 and by curing the resin by baking.

The method for applying a resin to the surface of the chemical conversion layer 30 is not particularly limited, and examples thereof include an application method using a reverse roll coater, a gravure roll coater, a spray coater, a knife edge coater, a curtain coater, a dip coater, or the like.

The method for baking and curing the resin is also not particularly limited, and examples thereof include a baking and curing method using hot air drying, near-infrared heating, IH, or the like. Among these, a baking and curing method using a hot air drying furnace or near-infrared heating is particularly preferable since the resin can be uniformly baked and cured.

A baking time and a baking temperature for the resin are important in order to form the resin-cured coating film layer 40 of which the maximum logarithmic decrement obtained by a rigid-body pendulum type vibration damping properties testing method at 150°C to 200°C is 0.15 or less.

Regarding the baking temperature in a hot air drying furnace, the steel sheet temperature is preferably 220°C to 260°C. The baking time is preferably 20 seconds to 3 minutes after the steel sheet temperature reaches 220°C.

In a case where the steel sheet temperature can be instantaneously increased as in a case of near-infrared heating or induction heating, the baking temperature for the steel sheet is preferably 250°C to 300°C. The baking time is preferably 1 second to 1 minute after the steel sheet temperature reaches 250°C.

It is not preferable that each of the baking temperature and the baking time is less than the above range since the maximum logarithmic decrement at 150°C to 200°C of the resin-cured coating film layer 40 to be formed is greater than 0.15. In addition, it is not preferable that each of the baking temperature and the baking time is greater than the above range since the resin-cured coating film layer 40 to be formed deteriorates and the adhesion is reduced.

### <Thermal Fusion-Bonding Step>

In the thermal fusion-bonding step, a thermoplastic resin layer 50 having an oriented crystal layer (not shown) and having a thickness of 5 to 50 µm is formed on the resin-cured coating film layer 40 by thermally fusion-bonding a single-layer film 150 formed only of a stretched polyester-based film 52 having a melting point of 232°C or higher, or a multi-layer film 250 in which a polyester-based resin layer 54 is formed under the stretched polyester-based film 52, at a temperature that is higher than the melting point of the stretched polyester-based film 52 by 10°C or higher.

The method for thermally fusion-bonding the thermoplastic resin layer 50 is not particularly limited, and examples thereof include the following method. First, a steel sheet 10 (hereinafter, referred to as steel sheet before resin coating) having a Sn-plated layer 20, a chemical conversion layer 30, and a resin-cured coating film layer 40 formed thereon is heated by a method such as hot pressing, induction heating, a hot air drying furnace, or roll heating. Next, to the heated steel sheet before resin coating (not shown), films are separately fed from the front and rear surface sides of the steel sheet before resin coating (not shown). The fed films are pressed against the surface of the steel sheet before resin coating (not shown) by a lamination roll to thermally fusion-bond the films to the front and rear surfaces at the same time. This method is preferable since a thermoplastic resin layer 50 having a uniform layer structure in a width direction and in a length direction can be formed.

As the heating method for the steel sheet before resin coating (not shown), heating using a jacket roll or a lamination roll with a built-in heater, that is a method for heating a heat medium such as steam through the inside of a lamination roll, is preferable from the viewpoint of uniformly heating the steel sheet before resin coating (not shown) in the width direction and in the length direction.

A rubber roll is preferable as the lamination roll since an appropriate nip length can be secured in a film lamination portion. As a material of the rubber roll, rubber having high heat resistance such as fluororubber or silicon rubber is particularly preferable. Rubber obtained by appropriately kneading an inorganic filler such as talc, silica, and calcium carbonate in rubber to increase the rubber hardness may be used.

In the thermal fusion-bonding step, the single-layer film 150 or the multi-layer film 250 is thermally fusion-bonded at a temperature that is higher than the melting point of the stretched polyester-based film 52 by 10°C or higher. The temperature during the thermal fusion-bonding of the thermoplastic resin layer 50 is referred to as a thermal fusion-bonding temperature, the melting point of the stretched polyester-based film 52 is referred to as Tₘ, and the temperature that is higher than the melting point of the stretched polyester-based film 52 by 10°C is referred to as Tₘ₁₀.

The upper limit of the thermal fusion-bonding temperature is not particularly limited, and is, for example, 300°C. This is because the stretched polyester-based film 52 is completely melted in a case where the temperature is too high.

In a case where the thermal fusion-bonding temperature is lower than 232°C, the stretched polyester-based film 52 is not sufficiently melted, and thus the fusion-bonding to the resin-cured coating film layer 40 is not sufficient. Therefore, the thermoplastic resin layer 50 may be peeled off during the forming of the resin-coated Sn-plated steel sheet 1, and thus it is not preferable.

Even in a case where the thermal fusion-bonding temperature is 232°C or higher, in a case where the thermal fusion-bonding temperature is equal to or higher than Tₘ and is lower than Tₘ₁₀, the stretched polyester-based film 52 is not sufficiently fusion-bonded to the resin-cured coating film layer 40, and thus it is not preferable. In a case where the thermal fusion-bonding temperature is equal to or higher than Tₘ₁₀, the thermal fusion-bonding step can be performed in a state in which the stretched polyester-based film 52 and the Sn-plated layer 20 are properly melted. Accordingly, the roughness of the steel sheet 10 has little influence in the thermal fusion-bonding step, and thus air bubbles entering into the interface between the resin-cured coating film layer 40 and the thermoplastic resin layer 50 can be reduced. Since the entering air bubbles are reduced, the adhesion of the thermoplastic resin layer 50 to the resin-cured coating film layer 40 is improved, and the rust which is generated due to the ingress of water into the interface between the resin-cured coating film layer 40 and the thermoplastic resin layer 50 can be reduced. Accordingly, it is preferable that the thermal fusion-bonding temperature is equal to or higher than Tₘ₁₀ from the viewpoint of an improvement in corrosion resistance.

In a case where the thermoplastic resin layer 50 is the multi-layer film 250, the relationship between the thermal fusion-bonding temperature and the melting point of the polyester-based resin layer 54 is not particularly limited. However, in order to properly fusion-bond the thermoplastic resin layer 50 to the resin-cured coating film layer 40, it is preferable that the thermal fusion-bonding temperature is higher than the melting point of the polyester-based resin layer 54 by 10°C or higher in a case where the thermoplastic resin layer 50 is the multi-layer film 250.

After the thermal fusion-bonding step, the resin-coated Sn-plated steel sheet 1 is preferably cooled to a temperature lower than the crystallization temperature of the stretched polyester-based film 52 by a method such as water cooling, gas-water cooling, or air cooling. Specifically, the entire resin-coated Sn-plated steel sheet 1 is preferably cooled to a temperature lower than the crystallization temperature of the stretched polyester-based film 52 by a method such as water cooling or air cooling.

Accordingly, the melted amorphous phase in the thermoplastic resin layer 50 is spherocrystallized, and thus it is possible to prevent the adhered surface of the thermoplastic resin layer 50 from embrittling.

The time period from after the thermal fusion-bonding step until the cooling of the resin-coated Sn-plated steel sheet 1 to a temperature that is equal to or lower than the crystallization temperature is preferably 1 second or shorter. It is not preferable that the above-described time period is longer than 1 second since the melted amorphous phase in the thermoplastic resin layer 50 starts to crystallize, and thus the adhered surface of the thermoplastic resin layer 50 embrittles, and the peeling strength is reduced.

After the thermal fusion-bonding step, a wax may be applied to the surface of the resin-coated Sn-plated steel sheet 1. The wax to be applied is not particularly limited, and examples thereof include a glamour wax.

Examples of the method for applying a wax to the surface of the resin-coated Sn-plated steel sheet 1 include a method including: applying a melted wax or the like by a roll coater; and solidifying the wax by cooling, and a method including: immersing the resin-coated Sn-plated steel sheet 1 in a solvent obtained by melting a wax; and drying the wax.

### (Facility for Manufacturing Resin-Coated Sn-Plated Steel Sheet 1)

A facility (not shown) for manufacturing a resin-coated Sn-plated steel sheet 1 is provided with, in order from the upstream side, a plating device (not shown) which forms a Sn-plated layer 20 on at least one surface of a steel sheet 10, a chemical conversion device (not shown) which forms a chemical conversion layer 30 on the Sn-plated layer 20, a resin application device (not shown) which applies a resin on the chemical conversion layer 30, a resin baking and curing device (not shown) which is provided at a rear stage of the resin application device (not shown), and bakes and cures the applied resin to form a resin-cured coating film layer 40, and a thermal fusion-bonding device (not shown) which is provided at a rear stage of the resin baking and curing device (not shown) and is provided with a heating roll (not shown) and a lamination roll (not shown) to thermally fusion-bond a film to a surface of the resin-cured coating film layer 40 to thus form a thermoplastic resin layer 50.

In the manufacturing of the resin-coated Sn-plated steel sheet 1, the heating roll (not shown) which heats a steel sheet before resin coating (not shown) in the thermal fusion-bonding step generates the largest amount of Sn powder.

In the facility (not shown) for manufacturing a resin-coated Sn-plated steel sheet 1 according to this embodiment, the chemical conversion device (not shown) is provided on the downstream side of the plating device (not shown), the resin application device (not shown) is provided on the downstream side of the chemical conversion device (not shown), and the thermal fusion-bonding device (not shown) is provided on the downstream side of the resin application device (not shown).

In a case where the devices are provided in the above-described order, according to the facility (not shown) for manufacturing a resin-coated Sn-plated steel sheet 1 according to this embodiment, the heating roll (not shown) can pass in a state in which the Sn-plated layer 20 is coated with the chemical conversion layer 30 and the resin-cured coating film layer 40. Accordingly, the generation of a Sn powder can be reduced in comparison with a case in which the Sn-plated layer 20 directly comes into contact with the heating roll (not shown).

### [Examples]

Next, the invention will be described in more detail with examples and comparative examples. The invention is not limited to the examples.

### <Steel Sheet>

As a steel sheet, a steel sheet having a sheet thickness of 0.20 mm and surface roughness Ra of 0.30 µm was used. Regarding the size of the steel sheet, the width is 200 mm, and the length is 250 mm. In addition, as a steel sheet, a material subjected to single cold rolling, which includes the following components: 0.04% of C; 0.25% of Mn; 0.02% of Si; 0.05% of P; 0.03% of Al; and the remainder of Fe with unavoidable impurities, and of which the Rockwell superficial hardness (HR30RT) is 61, was used.

### <Sn-plated layer>

The above-described steel sheet was subjected to Sn-plating of the following M1 to M5. In M1 to M5, the Sn-plating method is a normal tin-electroplating method including: performing alkaline degreasing by subjecting a cold-rolled steel sheet to a cathodic electrolytic treatment in an aqueous solution of 5% sodium hydroxide; pickling the steel sheet in a 5% sulfuric acid; and subjecting the steel sheet to cathodic electrolysis in a phenol sulfonic acid bath to form a Sn-plated layer on a surface of the steel sheet. In M2, M3, and M5, by performing a reflow treatment after the formation of a Sn-plated layer, a Sn-Fe alloy layer was formed on the steel sheet, and the Sn-plated layer was formed on the Sn-Fe alloy layer.

In order to measure a Sn-plating amount and a Sn-Fe alloy amount, in a part (area: 26.42 cm²) with a diameter of 5.8 cm in a center portion of an extra plated steel sheet produced for measurement of a plating amount, Sn-plating was electrolytically peeled using a hydrochloric acid of 1 mol/l, and from the time and the current value required at this time for the peeling of the Sn-plated layer and the Sn-Fe alloy layer, a coulomb amount required for the electrolytic peeling of the Sn-plated layer and the Sn-Fe alloy layer was obtained to estimate a Sn amount and a Sn-Fe alloy amount. As each of the Sn amount and the Sn-Fe alloy amount, an average value of measurement values obtained from three samples was used.

M1: A Sn-plated layer having 0.2 g/m² of Sn in terms of metal Sn amount was formed on a surface of a steel sheet.

M2: A Sn-Fe alloy layer containing 1.3 g/m² of Sn in terms of metal Sn amount was formed on a surface of a steel sheet. A Sn-plated layer containing 10.7 g/m² of Sn in terms of metal Sn amount was formed on a surface of the Sn-Fe alloy layer.

M3: A Sn-Fe alloy layer containing 0.7 g/m² of Sn in terms of metal Sn amount was formed on a surface of a steel sheet. A Sn-plated layer containing 0.5 g/m² of Sn in terms of metal Sn amount was formed on a surface of the Sn-Fe alloy layer.

M4: A Sn-plated layer containing 0.1 g/m² of Sn in terms of metal Sn amount was formed on a surface of a steel sheet.

M5: A Sn-Fe alloy layer containing 1.5 g/m² of Sn in terms of metal Sn amount was formed on a surface of a steel sheet. A Sn-plated layer containing 10.7 g/m² of Sn in terms of metal Sn amount was formed on a surface of the Sn-Fe alloy layer.

### <Chemical Conversion Layer>

A chemical conversion layer was formed by any one of methods of the following K1 to K4.

In the measurement of the adhered amount of the chemical conversion layer, first, a sample with a diameter of 5 cm was collected by punching from a center portion of an extra Sn-plated chemical conversion steel sheet produced for measurement of a chemical conversion layer, and using a fluorescence X-ray absorption spectrum measuring device (Rigaku ZSX Primus II), a strength of an absorption spectrum of inorganic materials in the chemical conversion layer was measured in a diameter of 3 cm (area: 7.07 cm²).

Next, the adhered amounts of the inorganic materials were calculated per unit area from calibration curves of the respective inorganic materials, and the back calculation was performed from the composition ratio of the constituent elements of the chemical conversion layer to display an adhered amount (mg/m²) of the chemical conversion layer per unit area. As the adhered amount of the chemical conversion layer, an average value obtained from three samples was used.

K1: A steel sheet having a Sn-plated layer formed thereon (hereinafter, referred to as Sn-plated steel sheet) was subjected to a cathodic electrolytic treatment in an aqueous solution of sodium bichromate to form a chemical conversion layer having chromium hydroxide and chromium oxide.

K2: A Sn-plated steel sheet was subjected to a cathodic electrolytic treatment in an aqueous solution of fluorozirconic acid to form a chemical conversion layer having zirconium hydroxide and zirconium oxide.

K3: A Sn-plated steel sheet was subjected to a cathodic electrolytic treatment in an aqueous solution of fluorotitanic acid to form a chemical conversion layer having titanium hydroxide and titanium oxide.

K4: A Sn-plated steel sheet was immersed in an amino-based silane coupling liquid (aminosilane-based silane coupling agent KBE-903 manufactured by Shin-Etsu Chemical Co., Ltd.) to form a chemical conversion layer having silane hydroxide and silane oxide.

### <Resin-Cured Coating Film Layer>

An upper portion of the Sn-plated steel sheet having the chemical conversion layer formed thereon, in which the thickness of the chemical conversion layer was small, was cut, and the cut portion was adjusted to have a length of 200 mm. A solution of any one of resins of the following J1 to J4 was applied to the chemical conversion layer and baked in a hot air drying baking furnace to form a resin-cured coating film layer on the chemical conversion layer.

The adhered amount of the resin-cured coating film layer was measured by a weight method. That is, the weight of the Sn-plated steel sheet having the chemical conversion layer before coating with the resin-cured coating film layer was measured in advance by a precision balance, and after the resin-cured coating film layer was coated and baked, the weight was measured again. From a difference in weight between before and after the formation of the resin-cured coating film layer and a coating area, the adhered amount of the resin-cured coating film layer per unit area was calculated. As the adhered amount of the resin-cured coating film layer, an average value obtained from three samples was used.
J1 : Epoxy phenol resin
J2: Acrylic-modified epoxy resin
J3: Polyester/amino resin
J4: Polyester/isocyanate resin

### <Method for Measuring Logarithmic Decrement of Resin-Cured Coating Film Layer>

The logarithmic decrement of the resin-cured coating film layer was measured by a rigid-body pendulum type vibration damping properties testing method (rigid-body pendulum type physical property tester (RPT-3000W manufactured by A&D Company, Limited).

As a measurement sample, a sample having a width of 20 mm and a length of 40 mm, which had been cut and collected from a center portion of an extra test sheet produced for measurement of a logarithmic decrement of a resin-cured coating film layer, was used.

In the measurement, the temperature of a heating plate of the device was changed from 50°C to 250°C. The logarithmic decrement of the resin-cured coating film layer was measured every 1 °C from 50°C to 250°C. By selecting the maximum value from the logarithmic decrements measured every 1°C in a range of 150°C to 200°C, the maximum logarithmic decrement of the resin-cured coating film layer at 150°C to 200°C was obtained. As the maximum logarithmic decrement of the resin-cured coating film layer, an average value obtained from three samples was used.

The temperature of the steel sheet before resin coating was the temperature of the heating plate of the device, and the measurement of the logarithmic decrement was performed after 1 minute from when the temperature of the heating plate of the device reached the measurement temperature.

### <Thermoplastic Resin Layer>

A thermoplastic resin layer was formed by thermally fusion-bonding any one of films of the following F1 to F5 to the surface of the resin-cured coating film layer.

F1 : A single-layer film formed only of a stretched polyethylene terephthalate (PET)-based film having a melting point of 257°C

F2: A two-layer film formed of the following upper and lower layers

Upper Layer of F2: A polyethylene terephthalate resin which occupies 20% of the film thickness of F2 and has a melting point of 257°C

Lower Layer of F2: A copolymerized polyester resin (first copolymerized polyester resin) which occupies 80% of the film thickness of F2, has a melting point of 228°C, contains an ethylene terephthalate unit and an ethylene isophthalate unit, and in which an isophthalic acid component is 11 mol% in a case where a dicarboxylic acid component is 100 mol%

F3: A two-layer film formed of the following upper and lower layers

Upper Layer of F3: A polyethylene terephthalate resin which occupies 20% of the film thickness of F3 and has a melting point of 257°C

Lower Layer of F3: A copolymerized polyester resin (second copolymerized polyester resin) which occupies 80% of the film thickness of F3, has a melting point of 217°C, contains an ethylene terephthalate unit and a butylene terephthalate unit, and in which the butylene terephthalate unit is 50 mol%

F4: A single-layer film formed only of a copolymerized polyester resin (first copolymerized polyester resin) which has a melting point of 228°C and contains an ethylene terephthalate unit and an ethylene isophthalate unit, and in which an isophthalic acid component is 11 mol% in a case where a dicarboxylic acid component is 100 mol%

F5: A single-layer film formed only of a copolymerized polyester resin (second copolymerized polyester resin) which has a melting point of 217°C and contains an ethylene terephthalate unit and a butylene terephthalate unit, and in which the butylene terephthalate unit is 50 mol%

F6: A two-layer film formed of the following upper and lower layers

Upper Layer of F6: A crystalline polyamide resin which occupies 33% of the film thickness of F6 and has a melting point of 225°C

Lower Layer of F6: An amorphous polyester resin which occupies 67% of the film thickness of F6 and has no specific melting point

In the thermal fusion-bonding of the thermoplastic resin layer, the steel sheet before resin coating was heated to a predetermined temperature by passing the steel sheet between a pair of heating rolls, and just after that, films were fed to front and rear surfaces of the steel sheet before resin coating by a film feeding device. By a lamination roll made of rubber TEFLON (registered trademark), a thermoplastic resin layer was thermally fusion-bonded to the front and rear surfaces of the steel sheet before resin coating. The surface temperature of the lamination roll can be controlled by a backup roll.

After approximately 1 second from the thermal fusion-bonding of the thermoplastic resin layer, the resin-coated Sn-plated steel sheet was immersed in a water cooling tank to water-cool the entire resin-coated Sn-plated steel sheet.

The film lamination device used in the thermal fusion-bonding is designed such that after a steel sheet before resin coating is heated to a predetermined temperature by passing the steel sheet between a pair of heating rolls, the steel sheet before resin coating is fed to a lamination roll, and at the same time, films for front and rear surfaces are fed from the front and rear surface sides of the steel sheet before resin coating, roll-pressed, and water-cooled after approximately 1 second.

In all of the examples and the comparative examples, the same films were thermally fusion-bonded to the front and rear surfaces of the steel sheet before resin coating. In the thermal fusion-bonding, the temperature (surface temperature of the steel sheet before resin coating) was equal to or higher than the melting point of the film, and was 270°C, 260°C, 240°C, 235°C, 230°C, or 225°C in accordance with the melting point of the film to be thermally fusion-bonded.

### [Elongation Rate]

The elongation rate of the film was measured by the following tension test.

The film before thermal fusion-bonding to the steel sheet before resin coating was cut to have a vertical length of 10 mm and a horizontal length of 70 mm to produce a tension test piece. A cellophane tape was stuck in a range of 20 mm from a left end of the tension test piece and in a range of 20 mm from a right end to provide grip sections in the tension test.

In the tension test, the right and left grip sections of the tension test piece were gripped with two chucks of a tension tester. The distance between the two chucks was set to 30 mm. In this state, the tension test piece was pulled in a horizontal direction at a speed of 20 mm/min until the tension test piece broke. The value obtained by dividing a distance between the chucks in unit mm at the time of breaking of the tension test piece by a distance of 30 (mm) between the chucks in the initial state was defined as an elongation rate (%). As the elongation rate, an average value obtained from three samples was used.

### [Presence or Absence of Indentations]

The presence or absence of indentations was classified into the following two stages based on whether indentations (irregularities) resulting from the peeling of the Sn-plated layer were shown on the surface of the resin-coated Sn-plated steel sheet. The presence or absence of indentations was determined by observing the surface of the resin-coated Sn-plated steel sheet after the thermal fusion-bonding step. The resin-coated Sn-plated steel sheet used in the determination has a size of 200 mm × 200 mm. The presence or absence of indentations was evaluated using three samples at any level.

Good: The surface of the resin-coated Sn-plated steel sheet was flat without indentations.

Poor: Spot-like recessed parts were recognized on the surface of the resin-coated Sn-plated steel sheet.

### [Forming State of Resin-Cured Coating Film Layer]

Forming state of the resin-cured coating film layer was classified into three stages based on the following standards. Forming state of the resin-cured coating film layer was determined by visual observation after the resin-cured coating film layer forming step. The resin-coated Sn-plated steel sheet used in the determination has a size of 200 mm × 200 mm. Forming state of the resin-cured coating film layer forming state was evaluated using three samples at any level.

Good: The formed resin-cured coating film layer has a uniform film thickness.

Poor: The formed resin-cured coating film layer has a non-uniform film thickness.

Bad: In a case where the resin is applied to the chemical conversion layer, liquid repellency occurs, and thus the resin cannot be uniformly applied.

### [Adhesion State of Resin-Cured Coating Film Layer to Heating Roll]

Based on whether the resin-cured coating film layer was adhered to a surface of a pair of heating rolls (rolls made of chromium-plated steel with a built-in electrothermal heater) for steel sheet heating used in the thermal fusion-bonding step, the adhesion state of the resin-cured coating film layer to the heating roll was determined. The adhesion state of the resin-cured coating film layer to the heating roll was evaluated using three samples at any level.

The determination standards are as follows.

Good: The resin-cured coating film layer was not adhered to the surface of the heating roll surface.

Poor: The resin-cured coating film layer was adhered to a part of the heating roll, but not adhered in almost all parts.

Bad: The resin-cured coating film layer was adhered to almost all parts of the heating roll.

### [Corrosion Resistance]

The resin-coated Sn-plated steel sheet was made into a drawing and redrawing (DRD) can. The DRD can was filled with an aqueous solution of 3% acetic acid and 2% salt, and put into a steam boiler to perform a retort treatment for 90 minutes at 125°C.

After the retort treatment, the corrosion resistance was determined based on a corrosion state on the inner surface side of the can. The determination standards are as follows. The corrosion resistance was evaluated using three samples at any level.

Good: No corrosion occurred at all.

Poor: A small number (1 to 10) of minute black rust spots occurred.

Bad: The thermoplastic resin layer on the inner surface side of the can constricted and was peeled off due to the corrosion.

A case where the corrosion resistance is evaluated as good represents that the can is available not only for a content having a low corrosive property, but also for a content having a high corrosive property. A case where the corrosion resistance is evaluated as poor represents that the can is available for a content having a low corrosive property, but is difficult to use for a content having a high corrosive property. A case where the corrosion resistance is evaluated as bad represents that the can is difficult to use not only for a content having a high corrosive property, but also for a content having a low corrosive property.

Table 1 shows the steel sheets and the Sn-plated layers used in the examples and the comparative examples.
Table 2 shows the chemical conversion methods used in the examples and the comparative examples.
Table 3 shows the forming methods, the adhered amounts, and the maximum logarithmic decrements at 150°C to 200°C of the resin-cured coating film layers used in the examples and the comparative examples.
Table 4 shows the layer configurations, the melting points, the thicknesses, and the elongation rates of the thermoplastic resin layers used in the examples and the comparative examples.
Tables 5 to 8 show the steel sheets, the chemical conversion layers, the resin-cured coating film layers, the thermoplastic resin layers, the thermal fusion-bonding temperatures, and the evaluation results of the characteristics of the examples and the comparative examples.

The examples and the comparative examples shown in Tables 5 to 8 show the results obtained many times as a representative for the evaluation results obtained from three samples at each level.

**[Table 1]**

| Symbol | Sheet Thickness of Steel Sheet (mm) | Sn-plated layer | Sn Content (g/m²) |
|---|---|---|---|
| M1 | 0.20 | metal Sn layer | 0.2 |
| M2 | 0.20 | Sn-plated layer having metal Sn layer on Sn-Fe alloy layer | 12.0 |
| M3 | 0.20 | Sn-plated layer having metal Sn layer on Sn-Fe alloy layer | 1.2 |
| M4 | 0.20 | Sn-Fe alloy layer | 0.1 |
| M5 | 0.20 | Sn-plated layer having metal Sn layer on Sn-Fe alloy layer | 12.2 |

**[Table 2]**

| Symbol | Chemical Conversion Film Layer | | |
|---|---|---|---|
| | Chemical Conversion Method | Compounds Contained in Chemical Conversion Film Layer | Film Amount (mg/m²) |
| K1-1 | cathodic electrolytic treatment in aqueous solution of sodium bichromate | chromium oxide and chromium hydroxide | 2.0 |
| K1-2 | | | 20.0 |
| K1-3 | | | 1.0 |
| K1-4 | | | 22.0 |
| K2-1 | cathodic electrolytic treatment in aqueous solution of fluorozirconic acid | zirconium oxide and zirconium hydroxide | 2.0 |
| K2-2 | | | 20.0 |
| K2-3 | | | 1.0 |
| K2-4 | | | 22.0 |
| K3-1 | cathodic electrolytic treatment in aqueous solution of fluorotitanic acid | titanium oxide and titanium hydroxide | 2.0 |
| K3-2 | | | 20.0 |
| K3-3 | | | 1.0 |
| K3-4 | | | 22.0 |
| K4-1 | immersing in amino-based silane coupling liquid | silane oxide and silane hydroxide | 2.0 |
| K4-2 | | | 20.0 |
| K4-3 | | | 1.0 |
| K4-4 | | | 22.0 |

**[Table 3]**

| Symbol | Resin-Cured Coating Film Layer | | | | |
|---|---|---|---|---|---|
| | Kind of Resin | Baking Treatment Temperature (°C) | Baking Treatment Time (minutes) | Adhered Amount (g/m²) | Maximum Logarithmic Decrement at 150°C to 200°C |
| J1-1 | epoxy phenol resin | 260 | 2 | 0.10 | 0.11 |
| J1-2 | | | | 5.00 | 0.14 |
| J1-3 | | 220 | 2 | 0.10 | 0.16 |
| J1-4 | | | | 5.00 | 0.18 |
| J1-5 | | 260 | 2 | 0.06 | 0.11 |
| J1-6 | | | | 6.00 | 0.15 |
| J2-1 | acrylic modified epoxy resin | 230 | 2 | 0.10 | 0.10 |
| J2-2 | | | | 5.00 | 0.13 |
| J2-3 | | 200 | 2 | 0.10 | 0.17 |
| J2-4 | | | | 5.00 | 0.19 |
| J2-5 | | 260 | 2 | 0.06 | 0.08 |
| J2-6 | | | | 6.00 | 0.14 |
| J3-1 | polyester/amino resin | 280 | 1 | 0.10 | 0.12 |
| J3-2 | | | | 5.00 | 0.15 |
| J3-3 | | 220 | 1 | 0.10 | 0.17 |
| J3-4 | | | | 5.00 | 0.20 |
| J3-5 | | 240 | 1 | 0.06 | 0.12 |
| J3-6 | | | | 6.00 | 0.15 |
| J4-1 | polyester/isocyanate resin | 280 | 2 | 0.10 | 0.13 |
| J4-2 | | | | 5.00 | 0.15 |
| J4-3 | | 260 | 1 | 0.10 | 0.16 |
| J4-4 | | | | 5.00 | 0.18 |
| J4-5 | | 260 | 2 | 0.06 | 0.14 |
| J4-6 | | | | 6.00 | 0.15 |

**[Table 4]**

| Symbol | Layer Configuration | Thermoplastic Resin Layer | | | | |
|---|---|---|---|---|---|---|
| | | Kind of Upper Layer | Kind of Lower Layer | Melting Point | Thickness | Elongation Rate |
| | | | | (°C) | (µm) | (%) |
| F1-1 | single layer | stretched polyethylene terephthalate (PET)-based film | (none) | 257 | 5 | 130 |
| F1-2 | | | | 257 | 50 | 160 |
| F1-3 | | | | 257 | 4 | 130 |
| F1-4 | | | | 257 | 52 | 160 |
| F2-1 | two layer | polyethylene terephthalate resin (20% of total thickness) | copolymer of ethylene isophthalate and ethylene terephthalate (11 mol% of isophthalic acid component) (80% of total thickness) | upper layer: 257 | 5 | 140 |
| | | | | lower layer: 228 | | |
| F2-2 | | | | upper layer: 257 | 50 | 170 |
| | | | | lower layer: 228 | | |
| F2-3 | | | | upper layer: 257 | 4 | 140 |
| | | | | lower layer: 228 | | |
| F2-4 | | | | upper layer: 257 | 52 | 170 |
| | | | | lower layer: 228 | | |
| F3-1 | two layer | polyethylene terephthalate resin (20% of total thickness) | copolymer of ethylene terephthalate and butylene terephthalate (50% of butylene terephthalate unit) (80% of total thickness) | upper layer: 257 | 5 | 125 |
| | | | | lower layer: 217 | | |
| F3-2 | | | | upper layer: 257 | 50 | 135 |
| | | | | lower layer: 217 | | |
| F3-3 | | | | upper layer: 257 | 4 | 125 |
| | | | | lower layer: 217 | | |
| F3-4 | | | | upper layer: 257 | 52 | 135 |
| | | | | lower layer: 217 | | |
| F4 | single layer | copolymer of ethylene isophthalate and ethylene terephthalate (11 mol% of isophthalic acid component) | (none) | 228 | 20 | 140 |
| F5 | single layer | copolymer of ethylene terephthalate and butylene terephthalate (50% of butylene terephthalate unit) | (none) | 217 | 20 | 140 |
| F6 | two layer | crystalline polyamide resin (33% of total thickness) | amorphous polyester resin (67% of total thickness) | upper layer: 225 | 30 | 130 |
| | | | | lower layer: (having no specific melting point) | | |

**[Table 5]**

| Level | Steel Sheet | Chemical Conversion Layer | Resin-Cured Coating Film Layer | Thermoplastic Resin Layer | Thermal Fusion-Bonding Temperature (°C) | Results of Determination of Characteristics | | | | Remarks |
|---|---|---|---|---|---|---|---|---|---|---|
| | | | | | | Presence or Absence of Indentations | Forming State of Resin-Cured Coating Film Layer | Adhesion State of Resin-Cured Coating Film Layer to Heating Roll | Corrosion Resistance | |
| I | M1 | K1-1 | J1-1 | F1-1 | 270 | Good | Good | Good | Good | Invention Example |
| 2 | M2 | K1-1 | J1-1 | F1-1 | 270 | Good | Good | Good | Good | Invention Example |
| 3 | M4 | K1-1 | J1-1 | F1-1 | 270 | Good | Good | Good | Poor | Comparative Example |
| 4 | M5 | K1-1 | J1-1 | F1-1 | 270 | Poor | Good | Good | Good | Comparative Example |
| 5 | M1 | K1-2 | J1-1 | F1-1 | 270 | Good | Good | Good | Good | Invention Example |
| 6 | M2 | K1-2 | J1-1 | F1-1 | 270 | Good | Good | Good | Good | Invention Example |
| 7 | M4 | K1-2 | J1-1 | F1-1 | 270 | Good | Good | Good | Poor | Comparative Example |
| 8 | M5 | K1-2 | J1-1 | F1-1 | 270 | Poor | Good | Good | Good | Comparative Example |
| 9 | M1 | K2-1 | J1-1 | F1-1 | 270 | Good | Good | Good | Good | Invention Example |
| 10 | M2 | K2-1 | J1-1 | F1-1 | 270 | Good | Good | Good | Good | Invention Example |
| 11 | M4 | K2-1 | J1-1 | F1-1 | 270 | Good | Good | Good | Poor | Comparative Example |
| 12 | M5 | K2-1 | J1-1 | F1-1 | 270 | Poor | Good | Good | Good | Comparative Example |
| 13 | M1 | K2-2 | J1-1 | F1-1 | 270 | Good | Good | Good | Good | Invention Example |
| 14 | M2 | K2-2 | J1-1 | F1-1 | 270 | Good | Good | Good | Good | Invention Example |
| 15 | M4 | K2-2 | J1-1 | F1-1 | 270 | Good | Good | Good | Poor | Comparative Example |
| 16 | M5 | K2-2 | J1-1 | F1-1 | 270 | Poor | Good | Good | Good | Comparative Example |
| 17 | M3 | K1-3 | J1-1 | F1-1 | 270 | Good | Poor | Good | Good | Comparative Example |
| 18 | M3 | K1-4 | J1-1 | F1-1 | 270 | Poor | Good | Good | Bad | Comparative Example |
| 19 | M3 | K2-3 | J1-1 | F1-1 | 270 | Good | Poor | Good | Good | Comparative Example |
| 20 | M3 | K2-4 | J1-1 | F1-1 | 270 | Poor | Good | Good | Bad | Comparative Example |
| 21 | M3 | K3-1 | J1-1 | F1-1 | 270 | Good | Good | Good | Good | Invention Example |
| 22 | M3 | K3-2 | J1-1 | F1-1 | 270 | Good | Good | Good | Good | Invention Example |
| 23 | M3 | K3-3 | J1-1 | F1-1 | 270 | Good | Poor | Good | Good | Comparative Example |
| 24 | M3 | K3-4 | J1-1 | F1-1 | 270 | Poor | Good | Good | Bad | Comparative Example |
| 25 | M3 | K4-1 | J1-1 | F1-1 | 270 | Good | Good | Good | Good | Invention Example |
| 26 | M3 | K1-1 | J1-4 | F1-1 | 270 | Poor | Good | Poor | Poor | Comparative Example |
| 27 | M3 | K1-1 | J2-4 | F1-1 | 270 | Poor | Good | Poor | Poor | Comparative Example |
| 28 | M3 | K1-1 | J3-4 | F1-1 | 270 | Poor | Good | Poor | Poor | Comparative Example |
| 29 | M3 | K1-1 | J4-4 | F1-1 | 270 | Poor | Good | Poor | Poor | Comparative Example |
| 30 | M3 | K1-1 | J1-1 | F1-4 | 270 | Poor | Good | Poor | Poor | Comparative Example |
| 31 | M3 | K1-1 | J1-1 | F2-4 | 270 | Poor | Good | Poor | Poor | Comparative Example |
| 32 | M3 | K1-1 | J1-1 | F3-4 | 270 | Poor | Good | Poor | Poor | Comparative Example |

**[Table 6]**

| Level | Steel Sheet | Chemical Conversion Layer | Resin-Cured Coating Film Layer | Thermoplastic Resin Layer | Thermal Fusion-Bonding Temperature (°C) | Results of Determination of Characteristics | | | | Remarks |
|---|---|---|---|---|---|---|---|---|---|---|
| | | | | | | Presence or Absence of Indentations | Forming State of Resin-Cured Coating Film Layer | Adhesion State of Resin-Cured Coating Film Layer to Heating Roll | Corrosion Resistance | |
| 33 | M3 | K4-2 | J1-1 | F1-1 | 270 | Good | Good | Good | Good | Invention Example |
| 34 | M3 | K4-3 | J1-1 | F1-1 | 270 | Good | Poor | Good | Good | Comparative Example |
| 35 | M3 | K4-4 | J1-1 | F1-1 | 270 | Good | Good | Good | Bad | Comparative Example |
| 36 | M3 | K2-1 | J1-2 | F1-1 | 270 | Good | Good | Good | Good | Invention Example |
| 37 | M3 | K2-1 | J2-1 | F1-1 | 270 | Good | Good | Good | Good | Invention Example |
| 38 | M3 | K2-1 | J2-2 | F1-1 | 270 | Good | Good | Good | Good | Invention Example |
| 39 | M3 | K2-1 | J3-1 | F1-1 | 270 | Good | Good | Good | Good | Invention Example |
| 40 | M3 | K2-1 | J3-2 | F1-1 | 270 | Good | Good | Good | Good | Invention Example |
| 41 | M3 | K2-1 | J4-1 | F1-1 | 270 | Good | Good | Good | Good | Invention Example |
| 42 | M3 | K2-1 | J4-2 | F1-1 | 270 | Good | Good | Good | Good | Invention Example |
| 43 | M3 | K2-2 | J1-2 | F1-1 | 270 | Good | Good | Good | Good | Invention Example |
| 44 | M3 | K2-2 | J2-1 | F1-1 | 270 | Good | Good | Good | Good | Invention Example |
| 45 | M3 | K2-2 | J2-2 | F1-1 | 270 | Good | Good | Good | Good | Invention Example |
| 46 | M3 | K2-2 | J3-1 | F1-1 | 270 | Good | Good | Good | Good | Invention Example |
| 47 | M3 | K2-2 | J3-2 | F1-1 | 270 | Good | Good | Good | Good | Invention Example |
| 48 | M3 | K2-2 | J4-1 | F1-1 | 270 | Good | Good | Good | Good | Invention Example |
| 49 | M3 | K2-2 | J4-2 | F1-1 | 270 | Good | Good | Good | Good | Invention Example |
| 50 | M3 | K2-2 | J1-3 | F1-1 | 270 | Good | Good | Poor | Poor | Comparative Example |
| 51 | M3 | K2-2 | J1-4 | F1-1 | 270 | Poor | Good | Bad | Poor | Comparative Example |
| 52 | M3 | K2-2 | J1-5 | F1-1 | 270 | Good | Good | Poor | Poor | Comparative Example |
| 53 | M3 | K2-2 | J1-6 | F1-1 | 270 | Good | Good | Poor | Poor | Comparative Example |

**[Table 7]**

| Level | Steel Sheet | Chemical Conversion Layer | Resin-Cured Coating Film Layer | Thermoplastic Resin Layer | Thermal Fusion-Bonding Temperature (°C) | Results of Determination of Characteristics | | | | Remarks |
|---|---|---|---|---|---|---|---|---|---|---|
| | | | | | | Presence or Absence of Indentations | Forming State of Resin-Cured Coating Film Layer | Adhesion State of Resin-Cured Coating Film Layer to Heating Roll | Corrosion Resistance | |
| 54 | M3 | K2-2 | J2-3 | F1-1 | 270 | Good | Good | Poor | Poor | Comparative Example |
| 55 | M3 | K2-2 | J2-4 | F1-1 | 270 | Poor | Good | Bad | Poor | Comparative Example |
| 56 | M3 | K2-2 | J2-5 | F1-1 | 270 | Good | Good | Poor | Poor | Comparative Example |
| 57 | M3 | K2-2 | J2-6 | F1-1 | 270 | Good | Good | Poor | Poor | Comparative Example |
| 58 | M3 | K2-2 | J3-3 | F1-1 | 270 | Good | Good | Poor | Poor | Comparative Example |
| 59 | M3 | K2-2 | J3-4 | F1-1 | 270 | Poor | Good | Bad | Poor | Comparative Example |
| 60 | M3 | K2-2 | J3-5 | F1-1 | 270 | Good | Good | Poor | Poor | Comparative Example |
| 61 | M3 | K2-2 | J3-6 | F1-1 | 270 | Good | Good | Poor | Poor | Comparative Example |
| 62 | M3 | K2-2 | J4-3 | F1-1 | 270 | Good | Good | Poor | Poor | Comparative Example |
| 63 | M3 | K2-2 | J4-4 | F1-1 | 270 | Poor | Good | Bad | Poor | Comparative Example |
| 64 | M3 | K2-2 | J4-5 | F1-1 | 270 | Good | Good | Poor | Poor | Comparative Example |
| 65 | M3 | K2-2 | J4-6 | F1-1 | 270 | Good | Good | Poor | Poor | Comparative Example |
| 66 | M3 | K2-2 | J3-1 | F1-2 | 270 | Good | Good | Good | Good | Invention Example |
| 67 | M3 | K2-2 | J3-1 | F2-1 | 240 | Good | Good | Good | Good | Invention Example |
| 68 | M3 | K2-2 | J3-1 | F2-2 | 240 | Good | Good | Good | Good | Invention Example |
| 69 | M3 | K2-2 | J3-1 | F3-1 | 235 | Good | Good | Good | Good | Invention Example |
| 70 | M3 | K2-2 | J3-1 | F3-2 | 235 | Good | Good | Good | Good | Invention Example |
| 71 | M3 | K2-2 | J3-2 | F1-2 | 270 | Good | Good | Good | Good | Invention Example |
| 72 | M3 | K2-2 | J3-2 | F2-1 | 240 | Good | Good | Good | Good | Invention Example |
| 73 | M3 | K2-2 | J3-2 | F2-2 | 240 | Good | Good | Good | Good | Invention Example |
| 74 | M3 | K2-2 | J3-2 | F3-1 | 230 | Good | Good | Good | Good | Invention Example |
| 75 | M3 | K2-2 | J3-2 | F3-2 | 230 | Good | Good | Good | Good | Invention Example |
| 76 | M3 | K2-2 | J3-2 | F1-3 | 270 | Good | Good | Good | Poor | Comparative Example |
| 77 | M3 | K2-2 | J3-2 | F1-4 | 270 | Poor | Good | Good | Bad | Comparative Example |
| 78 | M3 | K2-2 | J3-2 | F2-3 | 240 | Good | Good | Good | Poor | Comparative Example |

**[Table 8]**

| Level | Steel Sheet | Chemical Conversion Layer | Resin-Cured Coating Film Layer | Thermoplastic Resin Layer | Thermal Fusion-Bonding Temperature (°C) | Results of Determination of Characteristics | | | | Remarks |
|---|---|---|---|---|---|---|---|---|---|---|
| | | | | | | Presence or Absence of Indentations | Forming State of Resin-Cured Coating Film Layer | Adhesion State of Resin-Cured Coating Film Layer to Heating Roll | Corrosion Resistance | |
| 79 | M3 | K2-2 | J3-2 | F2-4 | 240 | Good | Good | Good | Bad | Comparative Example |
| 80 | M3 | K2-2 | J3-2 | F3-3 | 235 | Good | Good | Good | Poor | Comparative Example |
| 81 | M3 | K2-2 | J3-2 | F3-4 | 235 | Good | Good | Good | Bad | Comparative Example |
| 82 | M3 | K1-1 | J1-1 | F1-1 | 260 | Good | Good | Good | Bad | Comparative Example |
| 83 | M3 | K1-1 | J1-1 | F1-2 | 260 | Good | Good | Good | Bad | Comparative Example |
| 84 | M3 | K1-1 | J1-1 | F2-1 | 235 | Good | Good | Good | Bad | Comparative Example |
| 85 | M3 | K1-1 | J1-1 | F2-2 | 235 | Good | Good | Good | Bad | Comparative Example |
| 86 | M3 | K1-1 | J1-1 | F3-1 | 225 | Good | Good | Good | Bad | Comparative Example |
| 87 | M3 | K1-1 | J1-1 | F3-2 | 225 | Good | Good | Good | Bad | Comparative Example |
| 88 | M3 | K1-1 | J1-1 | F3-2 | 225 | Good | Good | Good | Bad | Comparative Example |
| 89 | M3 | K1-1 | J1-1 | F4 | 240 | Good | Good | Good | Bad | Comparative Example |
| 90 | M3 | K1-1 | J1-1 | F5 | 230 | Good | Good | Good | Bad | Comparative Example |
| 91 | M3 | K1-1 | J1-1 | F6 | 240 | Good | Good | Good | Bad | Comparative Example |

As shown in Tables 1 to 8, the examples satisfying the conditions of the invention were excellent in all of the characteristics. In contrast, the comparative examples not satisfying the conditions of the invention were poor in some characteristics.

### [Industrial Applicability]

According to the embodiment, it is possible to provide a resin-coated Sn-plated steel sheet having excellent corrosion resistance and having less indentations, and a method and a facility for manufacturing the resin-coated Sn-plated steel sheet.

### [Brief Description of the Reference Symbols]

- 1:: RESIN-COATED Sn-PLATED STEEL SHEET
- 10:: STEEL SHEET
- 20:: Sn-PLATED LAYER
- 30:: CHEMICAL CONVERSION LAYER
- 40:: RESIN-CURED COATING FILM LAYER
- 50:: THERMOPLASTIC RESIN LAYER
- 52:: STRETCHED POLYESTER-BASED FILM
- 54:: POLYESTER-BASED RESIN LAYER
- 150:: SINGLE-LAYER FILM
- 250:: MULTI-LAYER FILM

## Claims

1. A resin-coated Sn-plated steel sheet comprising:
a steel sheet (10);
a Sn-plated layer (20) which is formed on at least one surface of the steel sheet (10) and contains 0.2 to 12.0 g/m² of Sn in terms of metal Sn amount;
a chemical conversion layer (30) which is formed on the Sn-plated layer (20) and contains a total of 50 to 100 mass% of inorganic hydroxide and inorganic oxide, and of which an adhered amount is 2.0 to 20.0 mg/m²;
a resin-cured coating film layer (40) which is formed on of the chemical conversion layer (30), and of which a maximum logarithmic decrement obtained by a rigid-body pendulum type vibration damping properties testing method at 150°C to 200°C is 0.15 or less, and an adhered amount is 0.10 to 5.00 g/m²; and
a thermoplastic resin layer (50) which is formed on the resin-cured coating film layer (40), has an oriented crystal layer, and has a thickness of 5 to 50 µm,
wherein the thermoplastic resin layer (50) is a single-layer film formed only of a stretched polyester-based film (52) having a melting point of 232°C or higher, or a multi-layer film in which a polyester-based resin layer (54) is formed under the stretched polyester-based film (52).

2. The resin-coated Sn-plated steel sheet according to claim 1,
wherein the thermoplastic resin layer (50) is the single-layer film, and
the stretched polyester-based film (52) is a polyethylene terephthalate resin.

3. The resin-coated Sn-plated steel sheet according to claim 1,
wherein the thermoplastic resin layer (50) is the multi-layer film,
the stretched polyester-based film (52) is a polyethylene terephthalate resin, and
the polyester-based resin layer (54) is a first copolymerized polyester resin which contains an ethylene terephthalate unit and an ethylene isophthalate unit, and in which an isophthalic acid component is less than 12 mol% in a case where a dicarboxylic acid component is 100 mol%, and the dicarboxylic acid component excluding the isophthalic acid component is a terephthalic acid component, or a second copolymerized polyester resin which contains an ethylene terephthalate unit and a butylene terephthalate unit, and in which the butylene terephthalate unit is 50 mol% or less in a case where a dicarboxylic acid component is 100 mol%.

4. A method for manufacturing a resin-coated Sn-plated steel sheet, comprising:
a plating step of forming a Sn-plated layer (20) containing 0.2 to 12.0 g/m² of Sn in terms of metal Sn amount on at least one surface of a steel sheet (10);
a chemical conversion step of forming, on the Sn-plated layer (20), a chemical conversion layer (30) of which an adhered amount is 2.0 to 20.0 mg/m² and which contains a total of 50% to 100% of inorganic hydroxide and inorganic oxide;
a resin-cured coating film layer (40) forming step of applying a resin to a surface of the chemical conversion layer (30) and curing the resin by baking to form a resin-cured coating film layer (40) of which a maximum logarithmic decrement obtained by a rigid-body pendulum type vibration damping properties testing method at a temperature of 150°C to 200°C is 0.15 or less, and an adhered amount is 0.10 to 5.00 g/m²; and
a thermal fusion-bonding step of thermally fusion-bonding a single-layer film formed only of a stretched polyester-based film (52) having a melting point of 232°C or higher, or a multi-layer film in which a polyester-based resin layer (54) is formed under the stretched polyester-based film (52) at a temperature that is higher than a melting point of the stretched polyester-based film (52) by 10°C or higher to form a thermoplastic resin layer (50) having an oriented crystal layer and having a thickness of 5 to 50 µm on the resin-cured coating film layer (40).

5. The method for manufacturing a resin-coated Sn-plated steel sheet according to claim 4,
wherein the thermoplastic resin layer (50) is the single-layer film, and
the stretched polyester-based film (52) is a polyethylene terephthalate resin.

6. The method for manufacturing a resin-coated Sn-plated steel sheet according to claim 4,
wherein the thermoplastic resin layer (50) is the multi-layer film,
the stretched polyester-based film (52) is a polyethylene terephthalate resin, and
the polyester-based resin layer (54) is a first copolymerized polyester resin which contains an ethylene terephthalate unit and an ethylene isophthalate unit, and in which an isophthalic acid component is less than 12 mol% in a case where a dicarboxylic acid component is 100 mol%, and the dicarboxylic acid component excluding the isophthalic acid component is a terephthalic acid component, or a second copolymerized polyester resin which contains the ethylene terephthalate unit and a butylene terephthalate unit, and in which the butylene terephthalate unit is 50 mol% or less in a case where a dicarboxylic acid component is 100 mol%.

7. The method for manufacturing a resin-coated Sn-plated steel sheet according to any one of claims 4 to 6,
wherein in the resin-cured coating film layer (40) forming step, the resin is applied using any one of a reverse roll coater, a gravure roll coater, a spray coater, a knife edge coater, a curtain coater, and a dip coater, and
the applied resin is baked and cured by hot air drying or near-infrared heating.

8. A manufacturing facility for manufacturing the resin-coated Sn-plated steel sheet according to any one of claims 1 to 3, comprising in order from the upstream side:
a plating device which is configured to form a Sn-plated layer (20) on at least one surface of a steel sheet (10);
a chemical conversion device which is configured to form a chemical conversion layer (30) on the Sn-plated layer (20);
a resin application device which is configured to apply a resin on the chemical conversion layer (30);
a resin baking and curing device which is provided at a rear stage of the resin application device, and is configured to bake and cure the applied resin to form a resin-cured coating film layer (40); and
a thermal fusion-bonding device which is provided at a rear stage of the resin baking and curing device and is provided with a heating roll and a lamination roll and thereby thermally fusion-bond a film to a surface of the resin-cured coating film layer (40) and thus form a thermoplastic resin layer (50).

## Patentansprüche

1. Harzbeschichtetes, Sn-plattiertes Stahlblech, welches aufweist:
ein Stahlblech (10);
eine Sn-plattierte Schicht (20), die auf zumindest einer Oberfläche des Stahlblechs (10) ausgebildet ist und 0,2 bis 12,0 g/m² Sn, bezogen auf die metallische Sn-Menge, enthält;
eine chemische Umwandlungsschicht (30), die auf der Sn-plattierten Schicht (20) ausgebildet ist und insgesamt 50 bis 100 Masse-% anorganisches Hydroxid und anorganisches Oxid enthält, und von der eine anhaftende Menge 2,0 bis 20,0 mg/m² beträgt;
eine harzgehärtete Beschichtungsfilmschicht (40), die auf der chemischen Umwandlungsschicht (30) ausgebildet ist und deren maximales logarithmisches Dekrement, das durch ein Starrkörper-Pendelverfahren zum Prüfen der schwingungsdämpfenden Eigenschaften bei 150 °C bis 200 °C erhalten wird, 0,15 oder weniger beträgt, und deren anhaftende Menge 0,10 bis 5,00 g/m² beträgt; und
eine thermoplastische Harzschicht (50), die auf der harzgehärteten Beschichtungsfilmschicht (40) ausgebildet ist, eine orientierte Kristallschicht aufweist und eine Dicke von 5 bis 50 µm aufweist,
wobei die thermoplastische Harzschicht (50) ein einschichtiger Film ist, der nur aus einem gestreckten Film auf Polyesterbasis (52) mit einem Schmelzpunkt von 232 °C oder höher ausgebildet ist, oder ein mehrschichtiger Film ist, in dem eine Harzschicht auf Polyesterbasis (54) unter dem gestreckten Film auf Polyesterbasis (52) ausgebildet ist.

2. Harzbeschichtetes, Sn-plattiertes Stahlblech nach Anspruch 1, wobei die thermoplastische Harzschicht (50) der einschichtige Film ist und der gestreckte Film auf Polyesterbasis (52) ein Polyethylenterephthalatharz ist.

3. Harzbeschichtetes, Sn-plattiertes Stahlblech nach Anspruch 1, wobei die thermoplastische Harzschicht (50) der Mehrschichtfilm ist, der gestreckte Film auf Polyesterbasis (52) ein Polyethylenterephthalatharz ist, und
die Harzschicht auf Polyesterbasis (54) ein erstes copolymerisiertes Polyesterharz ist, das eine Ethylenterephthalat-Einheit und eine Ethylenisophthalat-Einheit enthält, und in dem eine Isophthalsäure-Komponente weniger als 12 Mol-% in einem Fall beträgt, in dem eine Dicarbonsäure-Komponente 100 Mol-% beträgt, und die Dicarbonsäure-Komponente mit Ausnahme der Isophthalsäure-Komponente eine Terephthalsäure-Komponente ist, oder ein zweites copolymerisiertes Polyesterharz ist, das eine Ethylenterephthalat-Einheit und eine Butylenterephthalat-Einheit enthält, und in dem die Butylenterephthalat-Einheit 50 Mol-% oder weniger in einem Fall beträgt, in dem eine Dicarbonsäure-Komponente 100 Mol-% beträgt.

4. Verfahren zum Herstellen eines harzbeschichteten, Sn-plattierten Stahlblechs, das aufweist:
einen Plattierungsschritt zum Bilden einer Sn-plattierten Schicht (20), die 0,2 bis 12,0 g/m² Sn in Bezug auf die metallische Sn-Menge enthält, auf zumindest einer Oberfläche eines Stahlblechs (10);
einen chemischen Umwandlungsschritt, bei dem auf der Sn-plattierten Schicht (20) eine chemische Umwandlungsschicht (30) ausgebildet wird, deren anhaftende Menge 2,0 bis 20,0 mg/m² beträgt und die insgesamt 50 % bis 100 % anorganisches Hydroxid und anorganisches Oxid enthält;
einen Schritt zum Bilden einer harzgehärteten Beschichtungsfilmschicht (40), bei dem ein Harz auf eine Oberfläche der chemischen Umwandlungsschicht (30) aufgebracht und das Harz durch Brennen gehärtet wird, um eine harzgehärtete Beschichtungsfilmschicht (40) zu bilden, deren maximales logarithmisches Dekrement, das durch ein Starrkörper-Pendelverfahren zum Prüfen der schwingungsdämpfenden Eigenschaften bei einer Temperatur von 150 °C bis 200 °C erhalten wird, 0,15 oder weniger beträgt, und deren anhaftende Menge 0,10 bis 5,00 g/m² beträgt;
und einen thermischen Schmelzverbindungsschritt des thermischen Schmelzverbindens eines einschichtigen Films, der nur aus einem gestreckten Film auf Polyesterbasis (52) mit einem Schmelzpunkt von 232 °C oder höher ausgebildet ist, oder eines mehrschichtigen Films, in dem eine Harzschicht auf Polyesterbasis (54) unter dem gestreckten Film auf Polyesterbasis (52) bei einer Temperatur ausgebildet ist, die um 10 °C oder mehr höher als der Schmelzpunkt des gestreckten Films auf Polyesterbasis (52) ist, um eine thermoplastische Harzschicht (50) mit einer orientierten Kristallschicht und mit einer Dicke von 5 bis 50 µm auf der harzgehärteten Beschichtungsfilmschicht (40) zu bilden.

5. Verfahren zum Herstellen eines harzbeschichteten, Sn-plattierten Stahlblechs nach Anspruch 4,
wobei die thermoplastische Harzschicht (50) der Einschichtfilm ist, und
der gestreckte Film auf Polyesterbasis (52) ein Polyethylenterephthalatharz ist.

6. Verfahren zum Herstellen eines harzbeschichteten, Sn-plattierten Stahlblechs nach Anspruch 4,
wobei die thermoplastische Harzschicht (50) der Mehrschichtfilm ist,
der gestreckte Film auf Polyesterbasis (52) ein Polyethylenterephthalatharz ist, und
die Harzschicht auf Polyesterbasis (54) ein erstes copolymerisiertes Polyesterharz ist, das eine Ethylenterephthalat-Einheit und eine Ethylenisophthalat-Einheit enthält, und in dem eine Isophthalsäure-Komponente weniger als 12 Mol-% in einem Fall beträgt, in dem eine Dicarbonsäure-Komponente 100 Mol-% beträgt, und die Dicarbonsäure-Komponente mit Ausnahme der Isophthalsäure-Komponente eine Terephthalsäure-Komponente ist, oder ein zweites copolymerisiertes Polyesterharz ist, das die Ethylenterephthalat-Einheit und eine Butylenterephthalat-Einheit enthält, und in dem die Butylenterephthalat-Einheit 50 Mol-% oder weniger in einem Fall beträgt, in dem eine Dicarbonsäure-Komponente 100 Mol-% beträgt.

7. Verfahren zum Herstellen eines harzbeschichteten, Sn-plattierten Stahlblechs nach einem der Ansprüche 4 bis 6,
wobei in dem Schritt des Ausbildens der harzgehärteten Beschichtungsfilmschicht (40) das Harz unter Verwendung eines Umkehrwalzenbeschichters, eines Tiefdruckwalzenbeschichters, eines Sprühbeschichters, eines Messerkantenbeschichters, eines Vorhangbeschichters oder eines Tauchbeschichters aufgetragen wird, und
das aufgetragene Harz durch Heißlufttrocknung oder Nahinfraroterwärmung gebrannt und gehärtet wird.

8. Fertigungsanlage zum Herstellen des harzbeschichteten, Sn-plattierten Stahlblechs nach einem der Ansprüche 1 bis 3, aufweisend in der Reihenfolge von der stromaufwärts gelegenen Seite:
eine Plattierungsvorrichtung, die konfiguriert ist, eine Sn-plattierte Schicht (20) auf zumindest einer Oberfläche eines Stahlblechs (10) zu bilden;
eine chemische Umwandlungsvorrichtung, die konfiguriert ist, eine chemische Umwandlungsschicht (30) auf der Sn-plattierten Schicht (20) zu bilden;
eine Harzaufbringungsvorrichtung, die zum Aufbringen eines Harzes auf die chemische Umwandlungsschicht (30) konfiguriert ist;
eine Harzbrenn- und -aushärtungsvorrichtung, die an einer hinteren Stufe der Harzaufbringungsvorrichtung vorgesehen und konfiguriert ist, das aufgebrachte Harz zu brennen und auszuhärten, um eine harzgehärtete Beschichtungsfilmschicht (40) zu bilden; und
eine Vorrichtung zum thermischen Schmelzverbinden, die an einer hinteren Stufe der Harzbrenn- und -aushärtungsvorrichtung vorgesehen ist und mit einer Heizwalze und einer Laminierwalze versehen ist und dadurch einen Film mit einer Oberfläche der harzgehärteten Beschichtungsfilmschicht (40) thermisch schmelzverbindet und so eine thermoplastische Harzschicht (50) bildet.

## Revendications

1. Tôle d'acier plaquée de Sn et revêtue de résine, comprenant :
une tôle d'acier (10) ;
une couche plaquée de Sn (20) qui est formée sur au moins une surface de la tôle d'acier (10) et contient 0,2 à 12,0 g/m² de Sn en termes de quantité de Sn métallique ;
une couche de conversion chimique (30) qui est formée sur la couche plaquée de Sn (20) et contient un total de 50 à 100 % en masse d'hydroxyde inorganique et d'oxyde inorganique, et dont une quantité adhérente est de 2,0 à 20,0 mg/m² ;
une couche de film de revêtement de résine durcie (40) qui est formée sur la couche de conversion chimique (30), et dont un décrément logarithmique maximum obtenu par un procédé d'essai des propriétés d'amortissement des vibrations de type pendule à corps rigide de 150 °C à 200 °C est de 0,15 ou moins, et une quantité adhérente est de 0,10 à 5,00 g/m² ; et
une couche de résine thermoplastique (50) qui est formée sur la couche de film de revêtement de résine durcie (40), a une couche de cristaux orientés, et a une épaisseur de 5 à 50 µm,
dans laquelle la couche de résine thermoplastique (50) est un film monocouche formé uniquement d'un film à base de polyester à étirement (52) ayant un point de fusion de 232 °C ou plus, ou un film multicouche dans lequel une couche de résine à base de polyester (54) est formée sous le film à base de polyester à étirement (52).

2. Tôle d'acier plaquée de Sn et revêtue de résine selon la revendication 1,
dans laquelle la couche de résine thermoplastique (50) est le film monocouche, et
le film à base de polyester à étirement (52) est une résine de polyéthylène téréphtalate.

3. Tôle d'acier plaquée de Sn et revêtue de résine selon la revendication 1,
dans laquelle la couche de résine thermoplastique (50) est le film multicouche,
le film à base de polyester à étirement (52) est une résine de polyéthylène téréphtalate, et
la couche de résine à base de polyester (54) est une première résine polyester copolymérisée qui contient une unité de téréphtalate d'éthylène et une unité d'isophtalate d'éthylène, et dans laquelle un composant acide isophtalique est inférieur à 12 % en moles dans un cas où un composant acide dicarboxylique est de 100% en moles, et le composant acide dicarboxylique excluant le composant acide isophtalique est un composant acide téréphtalique, ou une seconde résine polyester copolymérisée qui contient une unité de téréphtalate d'éthylène et une unité de téréphtalate de butylène, et dans laquelle l'unité de téréphtalate de butylène représente 50 % en moles ou moins dans le cas où le composant acide dicarboxylique représente 100 % en moles.

4. Procédé de fabrication d'une tôle d'acier plaquée de Sn et revêtue de résine, comprenant :
une étape de placage consistant à former une couche plaquée de Sn (20) contenant 0,2 à 12,0 g/m² de Sn en termes de quantité de Sn métallique sur au moins une surface d'une tôle d'acier (10) ;
une étape de conversion chimique consistant à former, sur la couche plaquée de Sn (20), une couche de conversion chimique (30) dont la quantité adhérente est de 2,0 à 20,0 mg/m² et qui contient un total de 50 % à 100 % d'hydroxyde inorganique et d'oxyde inorganique ;
une étape de formation d'une couche de film de revêtement de résine durcie (40) consistant à appliquer une résine sur une surface de la couche de conversion chimique (30) et à durcir la résine par cuisson pour former une couche de film de revêtement de résine durcie (40) dont le décrément logarithmique maximum obtenu par un procédé d'essai des propriétés d'amortissement des vibrations de type pendule à corps rigide à une température de 150 °C à 200 °C est de 0,15 ou moins, et dont la quantité adhérente est de 0,10 à 5,00 g/m² ; et
une étape de liaison par fusion thermique consistant à lier par fusion thermique un film monocouche formé uniquement d'un film à base de polyester à étirement (52) ayant un point de fusion de 232 °C ou plus, ou un film multicouche dans lequel une couche de résine à base de polyester (54) est formée sous le film à base de polyester à étirement (52) à une température qui est supérieure à un point de fusion du film à base de polyester à étirement (52) de 10°C ou plus pour former une couche de résine thermoplastique (50) ayant une couche de cristaux orientés et ayant une épaisseur de 5 à 50 µm sur la couche de film de revêtement de résine durcie (40).

5. Procédé de fabrication d'une tôle d'acier plaquée de Sn et revêtue de résine selon la revendication 4,
dans lequel la couche de résine thermoplastique (50) est le film monocouche, et
le film à base de polyester à étirement (52) est une résine de polyéthylène téréphtalate.

6. Procédé de fabrication d'une tôle d'acier plaquée de Sn et revêtue de résine selon la revendication 4,
dans lequel la couche de résine thermoplastique (50) est le film multicouche,
le film à base de polyester à étirement (52) est une résine de polyéthylène téréphtalate, et
la couche de résine à base de polyester (54) est une première résine polyester copolymérisée qui contient une unité de téréphtalate d'éthylène et une unité d'isophtalate d'éthylène, et dans laquelle un composant acide isophtalique est inférieur à 12 % en moles dans un cas où un composant acide dicarboxylique est de 100% en moles, et le composant acide dicarboxylique excluant le composant acide isophtalique est un composant acide téréphtalique, ou une seconde résine polyester copolymérisée qui contient l'unité de téréphtalate d'éthylène et une unité de téréphtalate de butylène, et dans laquelle l'unité de téréphtalate de butylène représente 50 % en moles ou moins dans le cas où le composant acide dicarboxylique représente 100 % en moles.

7. Procédé de fabrication d'une tôle d'acier plaquée de Sn et revêtue de résine selon l'une quelconque des revendications 4 à 6,
dans lequel, dans l'étape de formation de couche de film de revêtement de résine durcie (40), la résine est appliquée en utilisant l'une quelconque d'un dispositif de revêtement à rouleaux inversés, d'un dispositif de revêtement à rouleaux d'héliogravure, d'un dispositif de revêtement par pulvérisation, d'un dispositif de revêtement à couteau, d'un dispositif de revêtement à rideau, et d'un dispositif de revêtement par immersion, et
la résine appliquée est cuite et durcie par séchage à l'air chaud ou par chauffage à infrarouge proche.

8. Installation de fabrication pour fabriquer la tôle d'acier plaquée de Sn et revêtue de résine selon l'une quelconque des revendications 1 à 3, comprenant dans l'ordre à partir du côté amont :
un dispositif de placage qui est configuré pour former une couche plaquée de Sn (20) sur au moins une surface d'une tôle d'acier (10) ;
un dispositif de conversion chimique qui est configuré pour former une couche de conversion chimique (30) sur la couche plaquée de Sn (20) ;
un dispositif d'application de résine qui est configuré pour appliquer une résine sur la couche de conversion chimique (30) ;
un dispositif de cuisson et de durcissement de résine qui est prévu à un étage arrière du dispositif d'application de résine, et qui est configuré pour cuire et durcir la résine appliquée afin de former une couche de film de revêtement de résine durcie (40) ; et
un dispositif de liaison par fusion thermique qui est prévu à un étage arrière du dispositif de cuisson et de durcissement de la résine et qui est pourvu d'un rouleau chauffant et d'un rouleau de stratification et qui lie ainsi par fusion thermique un film à une surface de la couche de film de revêtement de résine durcie (40) et forme ainsi une couche de résine thermoplastique (50).
